Europäisches Patentamt

**European Patent Office**

**Office européen des brevets**

(19)

(11) Numéro de publication: **0 138 653**
**B1**

(12) **FASCICULE DE BREVET EUROPEEN**

(45) Date de publication du fascicule du brevet:
**17.02.88**

(51) Int. Cl.⁴: **A 22 C 7/00**

(21) Numéro de dépôt: **84401778.0**

(22) Date de dépôt: **07.09.84**

(54) **Machine automatique à démouler des produits, en particulier des jambons.**

(30) Priorité: **13.09.83 FR 8314549**

(43) Date de publication de la demande:
**24.04.85 Bulletin 85/17**

(45) Mention de la délivrance du brevet:
**17.02.88 Bulletin 88/7**

(84) Etats contractants désignés:
**BE DE FR GB IT NL**

(56) Documents cités:
**FR - A - 1 255 857**
**FR - A - 1 334 429**
**FR - A - 2 350 791**
**FR - A - 2 459 000**
**FR - A - 2 483 183**
**US - A - 3 008 594**

(73) Titulaire: **KAUFLER, La Sauvagère Saint-Hovec,**
**F-22600 Loudeac (FR)**

(72) Inventeur: **Marchand, Bernard, La Sauvegère**
**Saint-Hovec, F-22600 Loudeac (FR)**
Inventeur: **Corveler, Yvon, Rue de Kerostin,**
**F-56300 Pontivy (FR)**
Inventeur: **Champalaune, Jean-Claude, La Chouannière,**
**F-22230 Merdrignac (FR)**
Inventeur: **Guillemet, Yannick, La Lande de Nohair,**
**F-56580 Brehan Loudignac (FR)**

(74) Mandataire: **Peuscet, Jacques, Cabinet Peuscet 68, rue**
**d'Hauteville, F-75010 Paris (FR)**

ACTORUM AG

**Description**

La présente invention concerne, d'une manière générale, une machine à démouler des produits.

L'invention se rapporte plus particulièrement à une machine automatique, destinée au démoulage de produits en particulier alimentaires, tels que les jambons, qui sont traités, par exemple cuits, en étant comprimés chacun dans la cuve d'un moule par le couvercle dudit moule; ce couvercle s'engage dans l'ouverture de la cuve et est rapporté de manière amovible sur la cuve grâce à au moins une traverse montée mobile sur deux colonnettes fixées sur le couvercle, cette traverse étant écartée du couvercle par des moyens élastiques, tels que deux ressorts à boudins montés chacun autour d'une colonnette, entre le couvercle et la traverse, chaque traverse portant deux bras de fermeture à crémaillère dont chacun est articulé sur une extrémité de la traverse et vient s'accrocher par l'une des dents de la crémaillère sous un rebord externe de la cuve entourant l'ouverture de celle-ci.

De tels moules sont bien connus et présentent non seulement différentes tailles, mais également différentes formes. C'est ainsi que, pour la cuisson des jambons, on utilise, notamment, des moules, dont la cuve, sensiblement parallélépipédique, est fermée par un couvercle plat portant une seule traverse accrochée par ses deux bras de fermeture sur les deux petits côtés opposés et plats de la cuve. On utilise aussi des moules dits «en forme de tonneau rond» ayant effectivement la forme d'un tonneau couché et coupé par un plan excentré mais parallèle à son axe, de sorte que la cuve et le couvercle soient bombés et concaves, la concavité de l'un de ces deux éléments étant tournée vers celle de l'autre, et le couvercle étant fixé sur la cuve par deux traverses parallèles et écartées l'une de l'autre.

Après leur cuisson, les jambons doivent être extraits des moules dans lesquels ils se trouvent, et cette extraction implique tout d'abord l'ouverture des moules par enlèvement de leur couvercle, puis la sortie des jambons hors des cuves ouvertes.

Afin de faciliter ces opérations, il a déjà été proposé d'utiliser des machines de démoulage telles que celles décrites dans les brevets français FR-A-1 255 857, 1 334 429 et 2 387 609, mais ces machines n'assurent automatiquement que le démoulage proprement dit, c'est-à-dire la sortie du jambon hors de la cuve, en ne traitant que des moules dont le couvercle a préalablement été enlevé, et dont la cuve est retournée de sorte que le jambon sorte de la cuve par gravité, après avoir été «décollé» de la cuve, soit par arrosage de celle-ci à l'eau chaude (brevet français FR-A-1 255 857), soit par insufflation d'un gaz sous pression dans un trou ménagé dans le fond de la cuve, à l'aide d'une cloche reliée à une source de gaz sous pression et montée à l'extrémité d'une tige de vérin (brevet français FR-A-1 334 429), la cloche constituant éventuellement, de plus, une masse percutante propulsée contre le fond de la cuve avec une vitesse suffisante pour provoquer un choc facilitant le décollement du jambon du fond de la cuve, autour du trou de ce fond (brevet français FR-A-2 387 609).

Mais, les opérations préalables d'enlèvement des couvercles et de retournement des cuves s'effectuent manuellement et sont des opérations fatigantes et pénibles pour la main-d'œuvre chargée de l'exécuter. La première opération précitée, en particulier, est particulièrement pénible, bruyante et dangereuse, car elle consiste à frapper à la masse sur les traverses des couvercles, afin de comprimer momentanément les ressorts et de faire sauter les cliquets de fermeture constitués par la coopération des dents des crémaillères des bras de fermeture avec le rebord des cuves. De plus, cette façon de procéder peut entraîner l'endommagement des moules.

Il a certes déjà été proposé, notamment par le brevet français FR-A-2 350 791, de réaliser également et automatiquement l'ouverture des moules à l'aide d'un mécanisme de décrochage des bras, qui écartent ceux-ci de la cuve retournée et les dégage d'encoches ménagées sur la traverse, à la suite de quoi le démoulage proprement dit est réalisé par gravité avec l'assistance soit d'une insufflation de gaz comprimé dans un trou du fond de la cuve, comme déjà présenté ci-dessus, soit d'une poussée mécanique exercée par un poussoir qui s'engage dans ce trou du fond de la cuve. Mais cette machine présente toujours l'inconvénient de ne traiter que des moules retournés et, de plus, elle assure l'évacuation des jambons et des couvercles détachés des cuves sur un même réceptacle, alors que les premiers doivent être amenés à un poste de conditionnement et/ou d'expédition, tandis que les seconds doivent être conduits dans un poste de lavage, ce qui suppose des opérations supplémentaires de tri. Enfin, cette machine ne peut traiter que des moules particuliers, qui ne sont pas les plus couramment utilisés et dont les bras d'accrochage du couvercle sont articulés sur la cuve.

Le brevet français FR-A-2 459 000 décrit une machine de démoulage, qui est capable de traiter des moules usuels à bras de fermeture solidaires des traverses; elle assure automatiquement l'enlèvement du couvercle des moules, le retournement de la cuve, la sortie du jambon ainsi que l'évacuation, d'une part, du jambon et, d'autre part, du couvercle, à l'aide d'un ensemble combiné comportant un berceau propre à recevoir un moule chargé et fermé, et, sur un côté du berceau, un extracteur propre à libérer le couvercle d'un moule; à cet effet, l'extracteur est mobile entre deux positions, dont l'une est une position écartée et d'attente, et l'autre une position rapprochée et de libération; de l'autre côté du berceau, la machine comporte un récepteur propre à recevoir le produit démoulé et à l'évacuer; le berceau est monté rotatif entre au moins deux positions, dont l'une est une position normale d'attente du moule, dans laquelle l'extracteur enlève le couvercle du moule, et dont l'autre est une position de démoulage, dans laquelle la cuve est renversée.

Afin de remédier aux inconvénients que représentent, pour cette machine, d'une part, sa faible cadence de production, puisqu'il faut attendre qu'un cycle de rotation complet du berceau soit achevé pour un moule avant de pouvoir charger le moule suivant sur le berceau et, d'autre part, la complexité de la structure de la machine, il a été proposé, dans le certificat d'addition français FR-E-2 483 183 rattaché au dernier brevet précité, d'aménager le berceau rotatif pour qu'il puisse recevoir simultanément deux moules disposés symétriquement par rapport à l'axe de rotation horizontal du berceau, un moule ouvert, dont la cuve est en position renversée, étant vidé de son contenu pendant que la cuve vidée du moule précédemment traité est évacuée du berceau et est remplacée sur celui-ci par un moule chargé et fermé à traiter. Le berceau rotatif porte deux blocs d'adaptation qui reçoivent les moules et qui comportent chacun un logement en U à rebords rentrants dans lequel le moule est glissé parallèlement à sa traverse et retenu par le rebord périphérique de sa cuve, en particulier lorsque celle-ci est renversée.

Mais cette machine a pour inconvénient que chaque couvercle est reposé sur la cuve vidée correspondante avant l'évacuation de celle-ci, et qu'il descend donc dans la cuve, ce qui impose une opération ultérieure supplémentaire de retrait du couvercle hors de la cuve, avant que ces deux éléments ne soient introduits dans une machine à laver. De plus, cette machine ne peut pas être utilisée pour toutes les formes de moule et, en particulier, elle est difficilement utilisable pour traiter des moules en forme de tonneaux ronds, fermés par quatre bras à crémaillère portés par deux traverses. Il est également très difficile de mécaniser cette machine pour ce qui concerne les opérations intervenant en aval, et il est pratiquement impossible de le faire pour les opérations d'amont, en raison de la présence du berceau rotatif, qui rompt la continuité d'une chaîne linéaire. Le dispositif de démoulage est constitué d'une ventouse d'insufflation d'un gaz sous pression.

Enfin, comme toutes les machines décrites dans les différents brevets cités ci-dessus, cette machine a pour inconvénient que les jambons sont évacués près du sol, ce qui est très discutable sur le plan de l'hygiène.

Par l'invention, on se propose de remédier aux différents inconvénients précités; l'invention a pour objet une machine qui assure automatiquement la libération et l'enlèvement du couvercle des moules, le démoulage du produit contenu dans la cuve des moules, et l'évacuation du couvercle détaché, de la cuve vidée, et enfin du produit démoulé, la machine s'intégrant aisément dans une chaîne mécanisée en amont comme en aval.

L'invention a également pour objet une machine à démouler capable de traiter les différents types de moules utilisés, et ne nécessitant, pour ce faire, que quelques opérations d'adaptation rapides et simples.

L'invention a encore pour objet une machine à démouler par aspiration, et, de préférence, vers le haut, afin de ne pas altérer l'emballage dans lequel le produit peut être conditionné dans le moule, et afin de le maintenir à l'abri de toute pollution au voisinage du sol. A cet effet, la machine selon l'invention comprend un bâti supportant, en premier lieu, un dispositif extracteur du couvercle, ce dispositif extracteur comportant lui-même un mécanisme de décrochage pour décrocher du rebord de la cuve les bras de fermeture à crémaillère et un mécanisme d'enlèvement du couvercle par préhension de la ou des traverses, et, en second lieu, un dispositif de démoulage proprement-dit et d'évacuation des produits, chaque moule fermé et chargé étant introduit, parallèlement à la direction d'une traverse et à l'endroit, dans une gouttière de la machine, ladite gouttière ayant une section transversale sensiblement en U s'ouvrant vers le haut et présentant des rebords rentrants aptes à retenir la cuve du moule par son rebord externe lorsque son couvercle est enlevé par le dispositif extracteur; le produit étant alors sorti de la cuve par le dispositif de démoulage qui comprend une ventouse déplacée par au moins un organe de manœuvre; cette machine se caractérise par le fait que ladite ventouse est une ventouse d'aspiration déplaçable de telle façon que, pour chaque moule traité, ladite ventouse est successivement descendue au contact du produit dans l'ouverture de la cuve, puis, après mise en communication avec une source de dépression, est soulevée jusqu'à l'extraction complète du produit hors de la cuve, et enfin translatée latéralement par rapport à la gouttière jusqu'à venir au-dessus d'un convoyeur d'évacuation des produis, sur lequel le produit est déchargé, puis ladite ventouse est ramenée dans sa position initiale.

La machine selon l'invention se caractérise également par le fait qu'elle comprend une gouttière unique, montée amovible en position fixe sur le bâti, de sorte que sa section en U s'ouvre vers le haut, ladite gouttière coopérant avec une butée transversale d'arrêt de chaque moule dans la position où son couvercle est enlevé par le dispositif extracteur, ainsi qu'avec le mécanisme de décrochage, ledit mécanisme de décrochage comprenant un étrier en forme de U, qui s'ouvre vers le haut et dont chacune des branches est montée coulissante dans au moins une glissière solidaire de la gouttière et disposée sous la base de ladite gouttière, perpendiculairement à cette base, les glissières des deux branches de l'étrier étant espacées le long de la gouttière, la base de la gouttière présentant deux orifices de passsage pour les branches de l'étrier, ledit étrier étant monté mobile par rapport à la gouttière et étant déplacé par un organe de manœuvre entre deux positions, dont l'une est une position dans laquelle les branches de l'étrier sont sorties sous la gouttière, afin de permettre la mise en place d'un moule fermé et chargé dans la gouttière et contre la butée, et dont l'autre est une position dans laquelle les deux branches de l'étrier sont introduites dans la gouttière par les orifices de la base de celle-ci, la cuve du moule étant centrée, par ses deux côtés sur lesquels s'accrochent les bras de fermeture à crémaillère, entre les deux branches de l'étrier, dont chacune est engagée entre la cuve et le (ou les) bras de fermeture à crémaillère, qui s'accroche(nt) à la cuve du côté correspondant, afin de permettrre le décrochage desdits bras, la gouttière et l'étrier constituant un ensemble interchangeable adapté à une taille et une forme de moules à traiter ainsi qu'au nombre de traverses du couvercle de ce moule.

On comprend ainsi qu'il suffit de changer un ensemble constitué d'une gouttière et d'un étrier, et de le remplacer par un ensemble analogue conformé et dimensionné en fonction d'une taille et/ou d'une forme différente de moules, pour que la machine puisse traiter les moules présentant cette taille et/ou cette forme.

Dans une forme préférée de réalisation, la gouttière est rectiligne et présente, entre une entrée pour les moules fermés et chargés, et une sortie pour les cuves de moule vides, une longueur suffisante pour recevoir au moins deux moules séparés par la butée transversale, qui délimite dans la gouttière, d'une part une section amont, destinée à recevoir un moule fermé à ouvrir par le dispositif extracteur, et d'autre part, une section aval destinée à recevoir un moule ouvert à vider par le dispositif de démoulage.Cette réalisation a pour avantage que la gouttière est une structure simple et peu coûteuse. Selon un exemple particulier de réalisation, qui assure une bonne efficacité du décrochement des bras de fermeture à crémaillère du rebord des cuves, chaque branche de l'étrier forme une fourche présentant, pour chaque bras de fermeture à crémaillère s'accrochant du côté correspondant de la cuve, une portée en biseau externe, qui est orientée vers l'extérieur de la cuve et constitue un coin d'écartement du bras par rapport à la cuve, ladite portée externe étant située en retrait entre deux portées en biseau internes orientées vers l'intérieur de la cuve et constituant des chanfreins de centrage de la cuve entre les deux branches de l'étrier.

Afin d'assurer une manœuvre convenable de l'étrier tout en permettant le remplacement rapide d'un étrier par un autre étrier d'un ensemble adapté à un moule différent, l'organe de manœuvre de l'étrier est un vérin dont la tige est munie, à son extrémité libre, d'un organe d'accouplement et de désaccouplement rapide avec la base de l'étrier.

De préférence, afin de faciliter l'intervention du mécanisme de décrochage des bras de fermeture, le mécanisme d'enlèvement du couvercle comprend un organe de poussée, destiné à prendre appui sur chaque traverse et à comprimer les moyens élastiques, afin de faciliter l'écartement des bras de fermeture par les branches de l'étrier, ainsi qu'au moins deux organes de préhension destinés à s'engager latéralement sous la (ou les) traverse(s), les organes de poussée et de préhension étant déplacés par un vérin de poussée et de levage entre au moins deux positions, dont l'une est une position d'appui de l'organe de poussée sur chaque traverse et d'engagement des organes de préhension sous la (ou les) traverse(s), et dont l'autre est une position dans laquelle le couvercle est dégagé de la cuve et de la gouttière par le soulèvement de sa (ou ses) traverse(s) par les organes de préhension.

Dans une forme de réalisation permettant un bon fonctionnement en séquence, l'organe de poussée est la base d'un organe en U s'ouvrant vers le bas et dont les deux ailes ont un écartement réglable par coulissement et blocage sur la base, afin de chevaucher la (ou les) traverse(s) du couvercle, les organes de préhension étant constitués par les tiges de deux vérins transversaux fixés chacun par son cylindre à l'extérieur d'une aile de l'organe en U, les tiges sortant des cylindres et venant en saillie vers l'intérieur de l'organe en U sous (la ou les) traverse(s), afin de soulever cette (ou ces) dernière(s) avec le couvercle, par la manœuvre du vérin de levage.

Afin de permettre, en particulier, à la machine de traiter convenablement les moules dits «en forme de tonneau rond», dont le couvercle est concave, et avec lesquels le produit moulé tend, au moins partiellement, à rester «collé» au couvercle, lors de l'enlèvement de celui-ci, la machine selon l'invention est avantageusement telle que le mécanisme d'enlèvement du couvercle comprend également un organe destiné à décoller le couvercle du produit; cet organe comporte une ventouse d'insufflation d'un gaz sous pression dans un trou central du couvercle, ladite ventouse d'insufflation étant appliquée contre le couvercle au droit de son trou central, ou écartée du couvercle par un vérin d'approche et d'écartement, qui est coaxial au vérin d'appui et de levage et se trouve porté par la tige de ce dernier.

Avantageusement le mécanisme d'enlèvement du couvercle est translaté latéralement par rapport à la gouttière entre deux positions dont l'une est une position située au-dessus de la gouttière et dans laquelle le vérin d'appui et de levage est destiné à être manœuvré, et dont l'autre est une position située au-dessus d'un convoyeur d'évacuation des couvercles sur lequel les couvercles sont déchargés par le dégagement latéral des organes de préhension du dessous de la (ou des) traverse(s).

Dans ce cas, il est avantageux que la ventouse d'aspiration du dispositif de démoulage soit également déplacée entre sa position de contact avec le produit à démouler et sa position d'extraction complète du produit hors de la cuve par un vérin de levage et d'abaissement, et les translations latérales de la ventouse d'aspiration et du mécanisme d'enlèvement du couvercle par rapport à la gouttière sont alors avantageusement commandées de manière simultanée par un vérin de translation, déplaçant un cadre, qui supporte le mécanisme d'enlèvement du couvercle et le vérin de levage et d'abaissement de la ventouse d'aspiration, entre deux positions, dont l'une est une position dans laquelle la ventouse d'aspiration et le mécanisme d'enlèvement du couvercle sont tous deux au-dessus de la gouttière, et l'autre une position dans laquelle la ventouse d'aspiration et le mécanisme d'enlèvement du couvercle sont, respectivement, au-dessus du convoyeur d'évacuation des produits et du convoyeur d'évacuation des couvercles, qui peuvent s'étendre parallèlement l'un à l'autre.

Mais, de préférence, le dispositif de démoulage comprend également un organe destiné à décoller le produit de la cuve du moule, et qui comporte une ventouse d'insufflation d'un gaz sous pression dans un trou central du fond de la cuve, cette ventouse d'insufflation étant appliquée contre le fond de la cuve au droit dudit trou en s'engageant dans un orifice ménagé à cet effet dans la base de la gouttière, ou étant écartée du fond de la cuve par un vérin d'approche et d'écartement monté fixe sur le bâti de la machine et disposé sous la gouttière. On obtient ainsi que la coopération de l'organe de décollement du produit de la cuve avec la ventouse d'aspiration assure, dans de bonnes conditions, la séparation du produit et de la paroi interne de la cuve, quelle que soit la forme de cette cuve.

Dans une forme simple et pratique de réalisation, la butée transversale est une butée fixe formant un pont au-dessus de l'ouverture supérieure de la gouttière, et contre laquelle vient en appui l'extrémité aval de la (ou des) traverse(s) des moules fermés et chargés introduits dans la gouttière et/ou le bras de fermeture de l'extrémité aval de chacune de ces traverses, une telle butée présentant l'avantage de ne pas s'opposer au déplacement dans la gouttière d'une cuve de moule sans couvercle. De la sorte, la cuve d'un moule dont le couvercle a été enlevé dans la section d'amont de la gouttière peut être poussée dans la section d'aval, en position convenable pour le démoulage du produit, par la poussée du moule suivant qui est bloqué en position convenable pour l'enlèvement de son couvercle, dans la section d'amont de la gouttière, par la butée ainsi réalisée en forme de pont.

Selon une première variante, la gouttière se prolonge par une goulotte de renversement des cuves, s'étendant en arc de cercle vertical et débouchant, sous la gouttière, sur un convoyeur d'évacuation des cuves vides et renversées. Avantageusement dans ce cas, la sortie du convoyeur d'évacuation des couvercles débouche sur l'extrémité supérieure d'une glissière, qui délivre, à son extrémité inférieure, les couvercles sur le convoyeur d'évacuation des cuves, afin de regrouper sur ce convoyeur une cuve et son couvercle avant leur passage dans un poste de nettoyage, qui comprend avantageusement une machine à laver.

Selon une deuxième variante, la gouttière est suivie d'un plateau susceptible de pivoter autour d'un axe pour assurer le renversement des cuves et leur évacuation sur un convoyeur. Avantageusement, dans ce cas, le convoyeur est disposé sensiblement parallèlement à la ligne moyenne de la gouttière et, au droit du dispositif extracteur de couvercle, il reçoit le couvercle transporté par le mécanisme d'enlèvement du couvercle, le convoyeur d'évacuation du produit extrait de la cuve de moule étant disposé au-dessus du convoyeur d'évacuation des moules selon une ligne moyenne sensiblement perpendiculaire à celle du convoyeur de moules.

Afin de faciliter le déplacement des moules dans la gouttière, cette dernière est, de préférence, équipée de cales de guidage, notamment latérales, réalisées en un matériau à faible coefficient de frottement, tel qu'une matière plastique, par exemple un polyéthylène.

Afin de permettre une interchangeabilité très rapide des différentes gouttières adaptées aux différents moules à traiter, chaque gouttière est de préférence solidaire de deux paires de douilles externes éventuellement fendues, chaque paire comprenant deux douilles coaxiales et décalées le long de la gouttière, sur un côté de celle-ci et l'axe des douilles d'une paire étant parallèle à l'axe des douilles de l'autre paire, la gouttière étant engagée par ses douilles sur deux tiges de support parallèles et solidaires du bâti de la machine, et la gouttière étant bloquée en position par sa venue en appui contre au moins une butée solidaire du bâti et par le vissage d'une butée à écrou sur l'extrémité filetée de chaque tige de support qui reste en saillie hors d'une douille. Il suffit donc de dévisser les deux butées à écrou pour pouvoir retirer une gouttière des deux tiges de support et engager une autre gouttière sur ces deux tiges, puis revisser les butées à écrou pour procéder à l'adaptation de la gouttière à un autre moule.

Pour mieux faire comprendre l'objet de l'invention, on va en décrire maintenant, à titre d'exemple illustratif, plusieurs modes de réalisation représentés sur les dessins annexés.

Sur ces dessins:

– la fig. 1 est une vue en perspective d'un premier type de moule;
– les fig. 2 ert 3 sont respectivement une vue en plan et une vue en élévation latérale d'un second type de moule, dit en forme de tonneau rond;
– la fig. 4 est une vue schématique en élévation latérale, selon IV–IV de la fig. 5, d'une machine de démoulage capable de traiter des moules tels que représentés sur les fig. 1 à 3;
– la fig. 5 est une vue en élévation de face de cette même machine, selon V–V de la fig. 4;
– la fig. 6 est une vue en perspective et schématique d'un étrier utilisé sur la machine des fig. 4 et 5 pour traiter des moules selon la fig. 1;
– la fig. 7 est une vue en perspective analogue à la fig. 6 d'un étrier utilisé sur la machine des fig. 4 et 5 pour traiter des moules selon les fig. 2 et 3;
– la fig. 8 est une vue en coupe longitudinale partielle représentant la coopération de l'étrier de la fig. 6 avec le moule de la fig. 1 reçu dans la gouttière de la machine des fig. 4 et 5, afin d'assurer le décrochage des bras de fermeture;

– la fig. 9 est une vue partielle, à échelle agrandie, du mécanisme d'enlèvement des couvercles équipant la machine des fig. 4 et 5;

– la fig. 10 est une vue schématique en plan relative à une variante de réalisation de la machine représentée sur les fig. 4 et 5;

– la fig. 11 st une vue schématique en perspective du mode de réalisation représenté sur la fig. 10;

– la fig. 12 est une vue de détail d'une variante de réalisation de l'étrier représenté sur la fig. 7, cette variante étant plus particulièrement utilisable pour les moules en tonneau du type représenté sur la fig. 3;

– la fig. 13 est une coupe schématique d'un étrier analogue à celui de la fig. 6, ledit étrier étant, en variante, muni d'un dispositif d'aspiration destiné à coopérer avec un orifice pratiqué dans le fond du moule.

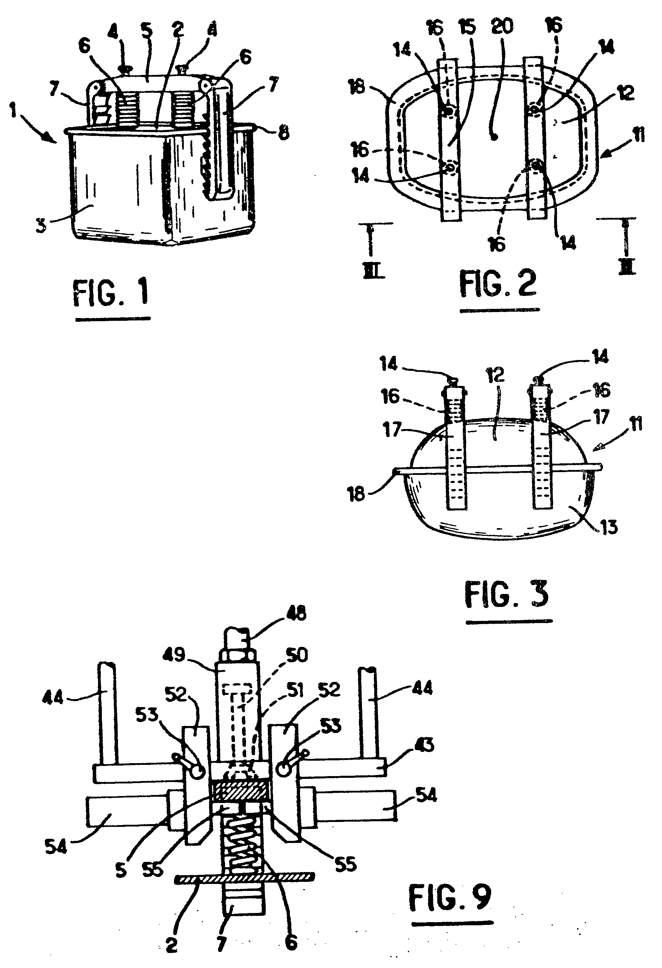

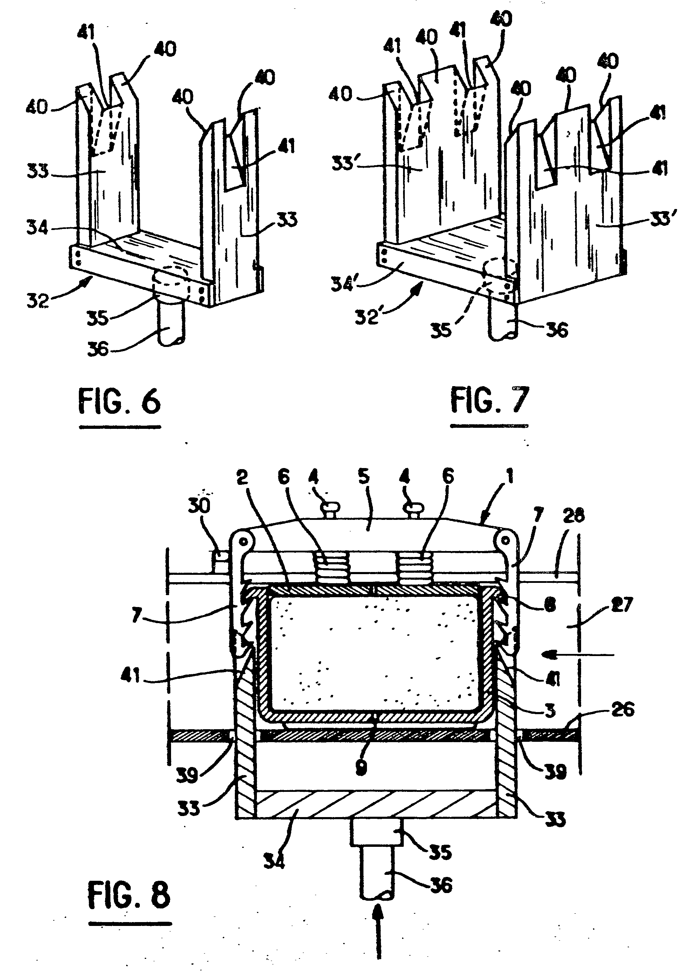

Comme cela est représenté sur la fig. 1, un moule 1 à ouvrir et à vider parvient à la machine conforme à l'invention et décrite ci-dessous en étant fermé par un couvercle 2 qui est engagé dans l'ouverture de la cuve 3 de ce moule, et qui porte en saillie deux colonnettes 4, sur lesquelles est montée coulissante une traverse 5, qui est écartée du couvercle 2 par deux ressorts à boudins 6 dont chacun est engagé autour d'une colonnette 4, entre le couvercle 2 et la traverse 5. Sur chacune des deux extrémités de cette traverse 5 est articulé un bras de fermeture 7 à crémaillère, dont une dent est engagée et en prise, à la manière d'un cliquet, sous le rebord externe 8 de la cuve 3, qui entoure l'ouverture de cette cuve 3, laquelle présente, dans cet exemple, une forme sensiblement parallélépipédique. En outre, comme cela est visible sur la fig. 8, le fond d'une telle cuve 3 est percé d'un trou central 9.

La cuve 3 du moule 1 contient un jambon, comprimé par le couvercle 2, et dont il s'agit d'assurer l'extraction.

Le moule 11, représenté sur les fig. 2 et 3, est un moule dit «en forme de tonneau rond», dont le couvercle 12 et la cuve 13 sont tous deux bombés et creux, et présentent une forme concave, telle que la concavité de chacun de ces deux éléments est tournée vers la concavité de l'autre élément, le couvercle 12 s'engageant également dans l'ouverture de la cuve 13. Dans ce second type de moule, la fermeture du couvercle 12 sur la cuve 13 est assurée par deux traverses 15, parallèles et écartées l'une de l'autre, et chacune des deux traverses 15 est montée sur le couvercle 12 et reliée à la cuve 13 de la même manière que la traverse 5 du premier type de moule de la fig. 1, c'est-à-dire que chaque traverse 15 est montée coulissante sur deux colonnettes 14, vissées par exemple sur le couvercle 12, et se trouve élastiquement écartée du couvercle 12 par deux ressorts 16 montés chacun autour d'une colonnette 16, entre le couvercle 12 et la traverse 15, sur les deux extrémités de laquelle s'articulent deux bras de fermeture à crémaillère 17 en prise sous le rebord externe 18 de la cuve 13. Comme sur le premier type de moule, le fond de la cuve 13 du moule 11 est percé d'un trou central, mais à la différence du premier type de moule 1, le couvercle 12 du moule 11 est également percé d'un trou central 20, et les bras à crémaillère 17 sont accrochés sous le rebord 18 le long des grands côtés de la cuve 13, et non sous le rebord 8 le long des petits côtés de la cuve 3.

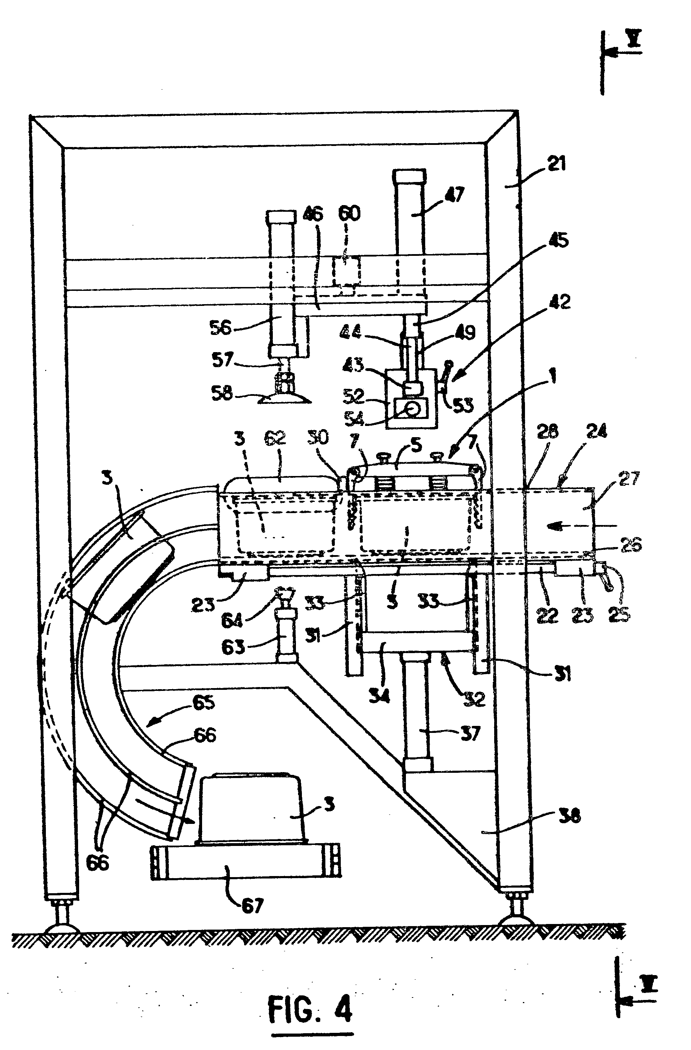

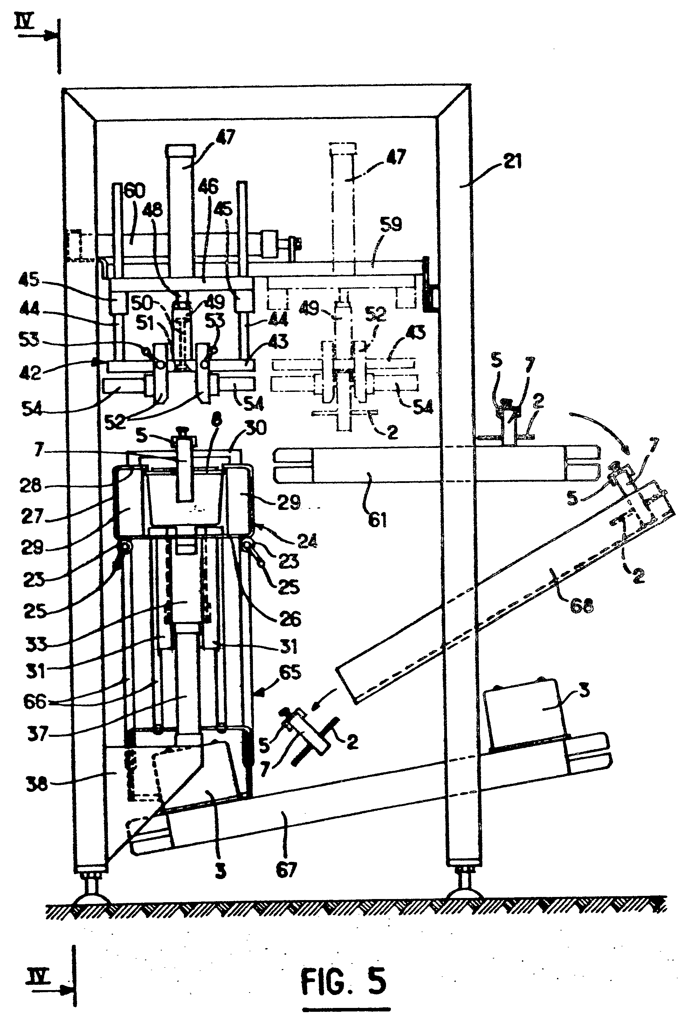

La machine représentée sur les fig. 4 et 5 peut recevoir et traiter des moules de différents types, et notamment ceux représentés sur les fig. 1 à 3, sous la réserve du montage sur la machine d'un ensemble spécifique du type de moules à recevoir. Mais dans un premier temps, la machine sera décrite telle qu'elle est équipée notamment avec le dispositif représenté sur la fig. 6, afin d'ouvrir et de vider des moules selon la fig. 1.

Sur les fig. 4 et 5, la machine comprend un bâti 21, dont l'ossature est constituée de montants et de traverses métalliques, et repose sur des pieds de hauteur réglable afin d'assurer la mise à niveau. Le bâti 21 supporte deux tiges de support cylindriques 22, parallèles et horizontales, et dont une extrémité est en saillie par rapport au bâti 21 sur la face frontale de la machine (à droite sur la fig. 4). Sur ces tiges de support 22 sont engagées quatre douilles cylindriques fendues 23 solidaires de la face externe de la base d'une gouttière 24 de forme parallélépipédique et allongée. Les quatre douilles 23 constituent deux paires de douilles coaxiales, qui, pour chaque paire, sont fixées à la gouttière 24, l'une à l'extrémité frontale ou amont de celle-ci qui constitue une entrée pour les moules à ouvrir et à vider, et l'autre à l'extrémité aval de la gouttière (à gauche sur la fig. 4) qui constitue une sortie pour les cuves vides des moules. Les axes des deux paires de douilles 23 sont parallèles et chaque paire est fixée d'un côté du plan longitudinal de symétrie de la gouttière 24. Cette dernière est ainsi montée sur le bâti 21 de la machine par l'engagement de ses douilles 23 sur les tiges 22 jusqu'à la venue en appui des deux douilles 23 de l'extrémité aval contre une butée (non représentée) du bâti, puis des butées à écrou 25 sont vissées sur les extrémités amont ou frontales filetées des tiges 22, afin de bloquer la gouttière 24 en position sur le bâti 21. Cette gouttière 24 présente une section transversale en forme de U s'ouvrant vers le haut, à base plane horizontale 26, à côtés verticaux 27 et à rebords rentrants 28. Des cales latérales de guidage 29, en polyéthylène, et de forme parallélépipédique, sont montées dans la gouttière 24 afin de faciliter le déplacement des moules dans celle-ci. La gouttière 24 est dimensionnée pour que les extrémités internes des rebords rentrants 28 soient juste au-dessus du rebord 8 du moule 1 sans venir au-dessus de l'ouverture de la cuve 3 de ce moule afin de ne pas gêner la sortie du couvercle 2, l'écartement des cales 29 et la hauteur utile de la gouttière 24 étant telles que les moules 1 ne puissent que pratiquement glisser longitudinalement dans la gouttière 24 lorsqu'ils sont introduits dans celle-ci parallèlement à la direction de leur traverse 5, qui est en saillie au-dessus de la gouttière 24 par l'ouverture supérieure de celle-ci. Une butée transversale 30, en forme de pont, s'étend au-dessus de l'ouverture supérieure de la gouttière 24 de manière à s'opposer au déplacement des moules par contact avec les bras de fermeture 7 de l'extrémité aval des traverses 5 de ces moules, comme cela est représenté sur la fig. 4. La butée 30 délimite sur la gouttière 24 une section d'amont située vers l'entrée, du côté de la face frontale de la machine, et une section d'aval, située de l'autre côté, vers la sortie de la gouttière 24.

Sous la section d'amont, la base 26 de la gouttière 24 est solidaire de deux paires de glissières latérales et verticales 31, espacées longitudinalement en correspondance avec l'écartement des deux branches 33 d'un étrier 32 qui est encliqueté par sa base 34 sur un embout 35 à accouplement et désaccouplement rapides porté par l'extrémité libre de la tige 36 d'un vérin de manœuvre à double effet 37, dont le cylindre est fixé au bâti 21 par l'intermédiaire d'une console 38. L'étrier en U 32 est monté coulissant verticalement par ses branches 33 dans les glissières 31 et est déplacé par le vérin 37 entre deux positions, dont l'une est une position basse, dans laquelle, comme représenté sur les fig. 4 et 5, les branches 33 ne pénètrent pas dans la gouttière 24 par deux orifices de passage 39 ménagés dans sa base 26, et dont l'autre est une position haute, dans laquelle, comme cela est représenté sur la fig. 8, les deux branches 33 pénètrent dans la gouttière 24 par les orifices de passage 39 de la base 26 de cette gouttière 24. L'étrier 32 est représenté sur la fig. 6 et ses deux branches 33 sont conformées en fourche ou en créneau et présentent deux portées internes latérales 40, en biseau vers l'intérieur de l'étrier en U, entre lesquelles une portée centrale externe 41 est en retrait et également en biseau, mais tournée vers l'extérieur de l'étrier en U. Les quatre portées latérales internes 40 constituent, aux extrémités supérieures des branches 33, des chanfreins de centrage de la cuve 3 d'un moule 1 entre ces deux branches 33, lorsque ce moule 1 est arrêté par la butée transversale 30 et que l'étrier 32 est levé par le vérin 37, tandis que les portées centrales externes 41 constituent des coins écartant les bras de fermeture 7 de la cuve 3, après le centrage de cette dernière, et en raison de la pénétration des branches 33 dans la gouttière 24, le long des côtés de la cuve 3 où sont accrochés les bras 7, comme cela est représenté sur la fig. 8. Afin de permettre l'écartement des bras 7, et donc leur décrochage de la cuve 3, sans avoir à forcer le verrouillage élastique de l'encliquetage assuré par les ressorts 6, l'action de l'étrier 32 est combinée à celle d'un mécanisme 42 d'enlèvement des couvercles des moules.

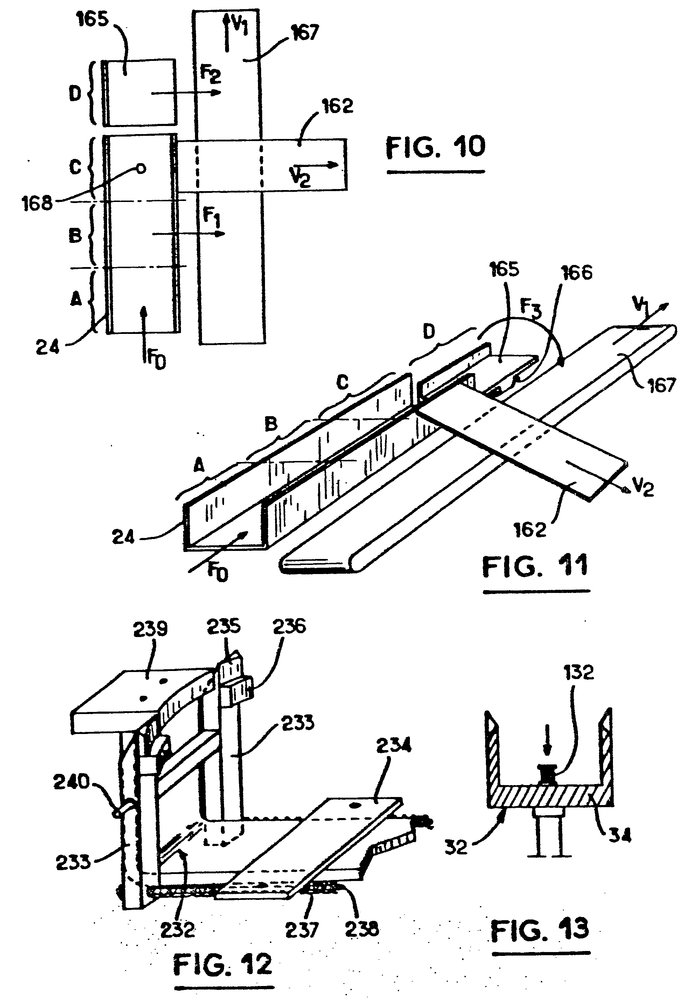

Le mécanisme 42 est suspendu au bâti 21 au-dessus de la section d'amont de la gouttière 24, et il comprend une barre horizontale et transversale 43, de section carrée, dont les deux extrémités sont solidaires de colonnes verticales 44 coulissant dans des manchons de guidage verticaux 45 portés par un cadre 46. Ce cadre 46 supporte également, entre les deux manchons 45, le cylindre vertical d'un vérin à double effet 47 dont la tige 48 porte, à son extrémité libre, le cylindre 49 d'un vérin à double effet coaxial au vérin 47, et dont la tige 50 déplace, au travers d'un passage ménagé dans la barre 43 qui est solidaire du cylindre 49, une ventouse ou cloche d'insufflation 51, alimentée au travers de la tige 50 par une électrovanne (non représentée) de distribution d'un gaz comprimé (voir fig. 5 et 9). De plus, deux ailes 52 verticales et parallèles en forme de plaques parallélépipédiques dont les bords inférieurs en regard sont chanfreinés, sont montées coulissantes sur la barre 43, sur laquelle elles peuvent être bloquées avec un écartement réglable entre elles, à l'aide de vis-pointeau à poignée de serrage 53. Chacune des ailes 52 supporte, à l'extérieur de l'organe en U tourné vers le bas qu'elles constituent avec la barre 43, le cylindre d'un vérin transversal à double effet 54 dont la tige 55 traverse l'aile 52 correspondante et vient en saillie vers l'intérieur de l'organe en U, en direction de la tige 55 de l'autre vérin 54. Le mécanisme 42 ainsi constitué peut être descendu par le vérin 47 vers un moule 1 retenu par la butée 30 dans la section d'amont de la gouttière 24, de sorte que son organe en U 43, 52 vienne chevaucher la traverse 5 du moule 1, puis exerce sur celle-ci une poussée vers le bas, à l'encontre des ressorts 6 qui sont comprimés, afin que les coins 41 des branches 33 de l'étrier 32 puissent sans difficulté écarter les bras de fermeture 7 de la cuve 3 et décrocher ces bras de cette cuve. Puis les tiges 55 des vérins transversaux 54, précédemment rétractés dans les ailes 52, sont sorties et s'engagent latéralement sous la traverse 5, comme représenté sur la fig. 9, de sorte que lorsque le vérin 47 relève le mécanisme 42, guidé dans ses déplacements verticaux par les colonnes 44 et les manchons 45, le couvercle 2 du moule 1, qui est à présent décroché de la cuve 3, est soulevé par sa traverse 5. Le cadre horizontal 46 supporte également, au-dessus de la section d'aval de la gouttière 24, le cylindre d'un vérin vertical 56 dont la tige 57 porte à son extrémité libre une ventouse d'aspiration 58, qui est reliée à une source de dépression, et qui peut être descendue dans l'ouverture supérieure de la gouttière 24 jusqu'à venir au contact du jambon contenu dans une cuve 3 reçu dans cette section d'aval de la gouttière 24 et dont le couvercle 2 a été enlevé lorsque cette cuve se trouvait précédemment dans la section d'amont. En effet, l'enlèvement du couvercle 2 permet à la cuve 3 d'être glissée sous la butée 30 et de passer de la section d'amont à la section d'aval de la gouttière 24.

De plus, le cadre horizontal 46 est monté coulissant transversalement et horizontalement sur des traverses 59 du bâti 21, et ce cadre 46 est déplacé, par un vérin de translation à double effet 60 dont le cylindre est fixé au bâti 21 et dont la tige est reliée au cadre 46, entre deux positions, dont l'une, représentée en traits pleins sur la fig. 5, est telle que le mécanisme 42 d'enlèvement des couvercles et le dispositif de démoulage à ventouse d'aspiration 58 sont respectivement à l'aplomb des sections d'amont et d'aval de la gouttière 24, et dont l'autre position, représentée en traits mixtes sur la fig. 5, est telle que ce mécanisme 42 et ce dispositif de démoulage à ventouse 58 se trouve respectivement à l'aplomb de deux convoyeurs horizontaux et parallèles, dont l'un 61 est un convoyeur d'évacuation des couvercles 2 équipés de leurs traverses 5 et de ses bras 7, et sur lequel les couvercles 2 sont déposés par la rétraction des tiges 55 des vérins transversaux 54, tandis que l'autre est un convoyeur 62 d'évacuation des jambons vers un poste de conditionnement et d'expédition, et sur lequel les jambons sont déposés par la ventouse 58 lorsque la liaison de cette dernière avec la source de dépression est interrompue. Sous la section d'aval de la gouttière 24 est également fixé au bâti 21 un cylindre d'un vérin à double effet 63 dont la tige, à son extrémité libre, porte une ventouse ou cloche d'insufflation 64, reliée à une électrovanne d'alimentation en gaz sous pression et qui peut être abaissée par le vérin 63 sous la base 26 de la gouttière 24, comme représenté sur la fig. 4, ou être élevée et engagée dans un orifice de la base 26, jusqu'à être appliquée contre le fond de la cuve 3 en position dans cette section d'aval, autour du trou 9 du fond de cette cuve 3, afin de faciliter, par l'insufflation de gaz comprimé dans le fond de la cuve 3 sous le jambon qu'elle contient, l'extraction de ce jambon par la ventouse d'aspiration 58, lorque le vérin 56 commande le relevage de cette dernière, en liaison avec la source de dépression.

A sa sortie, la gouttière 24 se prolonge par une goulotte de retournement 65, qui s'étend vers le bas, en arc de cercle dans un plan vertical, et qui est constituée de glissières 66 cintrées guidant la descente par gravité et le retournement des cuves vides 3 qui sortent de la gouttière 24. La sortie de la goulotte de retournement 65 débouche juste au-dessus d'un convoyeur d'évacuation transversal 67 qui assure l'évacuation des cuves 3 vides et retournées. De plus, comme la sortie du convoyeur 61 d'évacuation des couvercles 2 se termine au-dessus de l'extrémité supérieure d'une glissière 68 inclinée dont l'extrémité inférieure débouche également au-dessus du convoyeur 67, légèrement en aval de la sortie de la goulotte 65, on assure ainsi le regroupement, sur le convoyeur 67, d'une cuve 3 vide et retournée et de son couvercle 2, qui sont ainsi conduits ensemble, dans une configuration favorable, vers un poste de nettoyage.

Lorsqu'elle traite des moules 1 à une seule traverse 5, cette machine fonctionne de la façon suivante: un premier moule 1 est introduit dans l'entrée de la gouttière 24 par un convoyeur, puis, quelques instants après, un second moule 1 est introduit à son tour dans l'entrée de la gouttière 24, en repoussant le premier moule 1 en position dans la section d'amont et en appui par son bras 7 de fermeture aval contre la butée 30. Le vérin 37 commande alors la levée de l'étrier 32 dont les branches 33 assurent le centrage de la cuve 3 de ce premier moule entre elles, tandis que le vérin 47 commande la descente du mécanisme 42, dont la barre 43 vient s'appuyer sur la traverse 5 du premier moule et comprime les ressorts 6. La pénétration des branches 33 dans la gouttière 24 assure, par les coins 41, le décrochage des bras 7 du rebord 8 de la cuve 3 du premier moule. Les tiges 55 des vérins transversaux 54 s'engagent ensuite sous la traverse 5, puis le vérin 47 commande le relevage du mécanisme 42, avec le couvercle 2 retenu par sa traverse 5. Ensuite, tandis que le vérin 37 redescend l'étrier 32 et fait sortir ses branches 33 de la section d'amont de la gouttière 24, le vérin de translation 60 commande le déplacement latéral du cadre 46 jusqu'à amener le mécanisme 42 au-dessus du convoyeur 61, sur lequel le couvercle 2 du premier moule 1, transporté par ce mécanisme 42, est déchargé par la rétraction des tiges 55 des vérins 54. Le convoyeur 61 évacue ce couvercle 2 vers la glissière 68, tandis que le cadre 46 est ramené au-dessus de la gouttière 24 par le vérin 60. Entre temps, un troisième moule 1 est introduit dans l'entrée de la gouttière 24, et ce troisième moule repousse le second moule en position contre la butée 30 dans la section d'amont, tandis que la cuve 3 du premier moule 1, débarrassée de son couvercle 2, est repoussée par le second moule sous la butée 30, et vient en position dans la section d'aval de la gouttière 24. Le cycle précédemment décrit reprend pour assurer le décrochage et l'enlèvement du couvercle 2 du second moule. Mais tandis que le vérin 37 relève l'étrier 32 et que le vérin 47 redescend le mécanisme 42, le vérin 63 commande l'application de la cloche d'insufflation 64 contre le fond de la cuve 3 du premier moule, autour du trou 9 de ce fond, et le vérin 56 commande la descente de la ventouse d'aspiration 58 contre la face supérieure du jambon contenu dans cette cuve 3 du premier moule. L'insufflation d'un gaz comprimé et l'aspiration peuvent être commandées simultanément, puis le vérin 56 relève la ventouse 58 et le jambon démoulé de la cuve 3, tandis que le vérin 47 relève le mécanisme 42 et le couvercle 2 du second moule 1, et que les vérins 37 et 63 descendent respectivement l'étrier 32 et la cloche 64. Puis, le cadre 46 est à nouveau translaté par le vérin 60, de sorte que le mécanisme 42 décharge le couvercle 2 du second moule sur le convoyeur 61 et que la ventouse 58 décharge le jambon du premier moule sur le convoyeur 62. Ensuite, le cadre 46 est ramené par le vérin 60 en position au-dessus de la gouttière 24 et entre-temps, l'entrée d'un quatrième moule dans la gouttière 24 a repoussé le troisième moule dans la section d'amont en position contre la butée 30, la cuve 3 sans couvercle 2 du second moule dans la section d'aval, et la cuve vide 3 du premier moule dans la goulotte de retournement 65, qui la conduit sur le convoyeur 67, sur lequel elle est déposée pratiquement en même temps que son couvercle 2, qui, entre-temps, a été transféré du convoyeur 61 à la glissière 68 et a descendu cette dernière. Le fonctionnement de la machine se poursuit ainsi en séquences identiques à celle qui vient d'être décrite, à l'arrivée de chaque nouveau moule 1 chargé et fermé.

Si l'on souhaite ensuite ouvrir et vider des moules 11 en forme de tonneaux ronds, et dont les couvercles 12 comportent deux traverses 15, on remplace l'ensemble constitué par la gouttière 24, ses glissières 31 et l'étrier 32, et qui est spécifiquement réalisé pour le traitement des moules 1, par un ensemble analogue, spécifiquement réalisé pour le traitement des moules 11. Pour ce faire, on commande la rétraction totale de la tige 36 du vérin 37 dans son cylindre, ce qui provoque le désaccouplement automatique de l'embout 35 et de la base 34 de l'étrier 32 qui reste accroché aux glissières 31 grâce à des butées de ces dernières empêchant la sortie des branches 33. Puis, on dévisse les butées à écrou 25 et on retire la gouttière 24, ses glissières 31 et l'étrier 32 du bâti 21, en dégageant les douilles 23 des tiges 22. On met ensuite en place sur ces tiges 22 une nouvelle gouttière 24, dimensionnée pour convenir, dans les mêmes conditions que précédemment, aux moules 11, avec des glissières 31 adaptées à l'étrier 32' représenté sur la fig. 7. La base 34' de cet étrier 32' s'accouple et se désaccouple dans les mêmes conditions que la base 34 de l'étrier 32 sur l'embout 35 de la tige 36 du vérin 37, et les branches 33' de l'étrier 32' sont également conformées en fourche, mais il s'agit cette fois d'une fourche à deux portées externes 41 en biseau vers l'extérieur, formant des coins, situées chacune entre deux portées internes 40 en biseau vers l'intérieur, formant des chanfreins de centrage des cuves 13, car les moules 11 comportent deux traverses 15, et donc deux bras de fermeture 17 de chaque côté aval et amont. Bien entendu, les orifices 39 de passage des fourches 33' dans la base 26 de la nouvelle gouttière 24 sont dimensionnés en conséquence. De même, l'écartement des deux ailes 52 du mécanisme 42 est réglé pour que l'organe en U formé par ces ailes 52 et la barre 43 viennent chevaucher et appuyer sur les deux traverses 15 des moules 11.

Le fonctionnement de la machine pour ouvrir et vider les moules 11 est pratiquement identique à celui précédemment décrit, puisque la seule différence consiste à faire intervenir en plus, la cloche d'insufflation 51 déplacée par le vérin 49 du mécanisme 42. En effet, lors du démoulage d'un moule 11, en forme de tonneau rond, il peut se produire, en raison de la forme creuse du couvercle 12, que le jambon adhère au couvercle 12 et ne se détache pas de ce couvercle lorsque ce dernier est soulevé. Ceci peut entraîner la fragmentation du jambon en deux parties, si par ailleurs le jambon adhère également à la paroi de la cuve 13. Pour éviter ceci, après que les tiges 55 des vérins transversaux 54 sont engagées sous les deux traverses 15, alors que le mécanisme 42 est en position descendue et comprime par la barre 43 les ressorts 16 du couvercle 12, le vérin 49 est alimenté et sa tige 50 traverse la barre 43, passe entre les deux traverses 15 écartées l'une de l'autre, et applique la cloche 51 contre le couvercle 12, autour du trou central 20 de ce couvercle. Cette configuration assure une bonne coopération de la cloche 51 et du trou central 20, quel que soit le côté du moule 11 où s'accrochent des bras 17 qui constitue le côté aval après l'introduction du moule 11 dans la gouttière 24 correspondante.

Puis, la cloche 51 est alimentée en gaz sous pression injecté par le trou 20, afin de décoller le jambon du couvercle 12, avant le relevage de ce dernier avec le mécanisme 42. Pour le reste, la séquence de fonctionnement est identique à celle décrite précédemment en relation avec les moules 1.

Il est bien entendu que la machine ci-dessus décrite pourra donner lieu à toute modification désirable sans sortir pour cela du cadre de l'invention. En particulier, on a représenté sur les fig. 10 à 13 des variantes de réalisation de la machine qui a été précédemment décrite.

Sur les fig. 10 et 11, on a représenté une machine selon l'invention dans laquelle l'évacuation des couvercles des moules et des jambons est modifiée par rapport aux voies d'évacuation prévues pour la machine des fig. 4 et 5. On voit, en effet, que dans cette variante la gouttière 24 est suivie non plus par une goulotte de renversement des cuves mais par un plateau 165 qui est susceptible de pivoter autour d'un axe 166, selon la flèche F3, pour provoquer le retournement des cuves de moule et leur transfert depuis le plateau 165 jusqu'à un tapis roulant 167, selon la flèche F2. Dans cette variante, on a désigné sur le dessin par A, B, C, D les zones de la machine qui correspondent respectivement à l'introduction des moules fermés dans la gouttière 24, à l'extraction du couvercle, à l'extraction du jambon hors de la cuve du moule et à l'évacuation de la cuve de moule vide. La cuve de moule se déplace dans la gouttière 24 selon la flèche F0; le couvercle, après extraction dans la zone B, est déposé par le dispositif précédemment décrit pour la machine des fig. 4 et 5, sur le tapis roulant 167, le transfert du couvercle étant symbolisé par la flèche F1. Le tapis roulant 167, dont le sens de déplacement est figuré par la flèche V1, reçoit donc, en vis-à-vis du poste B, les couvercles de moules et, en vis-à-vis du plateau pivotant 165, les cuves retournées des moules. Ce tapis roulant 167 est disposé horizontalement à un niveau légèrement inférieur à celui du fond de la gouttière 24.

Le jambon, qui est extrait de la cuve de moule dans la zone C de la gouttière 24 au moyen d'un dispositif à ventouse identique à celui qui a été décrit pour la réalisation des fig. 4 et 5 (mais non représenté sur les fig. 10 et 11), est déposé par la ventouse d'aspiration sur un convoyeur 162, qui est constitué d'un plan incliné dont la ligne de plus grande pente est perpendiculaire à la ligne moyenne de la gouttière 24 et à la ligne moyenne du tapis roulant 167. Le plan incliné 162 passe au-dessus du tapis roulant 167, à une distance suffisante pour permettre le passage des couvercles de moules posés sur le tapis roulant 167 au droit de la zone B de la machine. Le jambon démoulé posé par la ventouse d'aspiration sur le plan incliné 162 glisse sur ce plan incliné et est éjecté de la machine selon la flèche V2.

Dans la zone C de la machine des fig. 10 et 11, c'est-à-dire dans la zone de démoulage du jambon, on prévoit un dispositif de soufflage 168, qui permet d'envoyer de l'air comprimé dans un trou pratiqué dans le fond des cuves de moule de façon à aider à l'extraction du jambon par la ventouse d'aspiration en décollant le jambon du fond du moule.

Dans certains cas, et notamment avec les moules en forme de tonneau, au moment où le couvercle de moule est séparé de la cuve de moule, le jambon a tendance à rester collé au couvercle. Il est important, dans un tel cas, pour le bon fonctionnement de la machine selon l'invention, de faire en sorte que le jambon reste à l'intérieur de la cuve de moule.Pour ce faire, dans la zone B qui correspond à l'extraction du couvercle, on prévoit un dispositif qui permet de réaliser une aspiration à travers un trou pratiqué sur le fond de la cuve du moule. Un tel dispositif est représenté schématiquement sur la fig. 13 où l'on voit un étrier 32 identique à celui représenté sur la fig. 6, à cette différence près qu'il est équipé d'un organe d'aspiration 132 mis en place dans la zone centrale de la base 34 de l'étrier 32. Ce dispositif d'aspiration 132 est constitué d'un soufflet élastique qui, lors de la montée de l'étrier 32 pour le dégagement des crémaillères du moule, vient à être comprimé entre la base 34 et le fond de la cuve du moule. Cette compression crée une étanchéité suffisante pour que l'aspiration effectuée à l'intérieur du soufflet 132 provoque une dépression dans le moule, dans la zone comprise entre le fond de cuve et le jambon, ce qui retient le jambon dans la cuve de moule et permet l'extraction du couvercle seul lorsque les crémaillères ont été dégagées.

Lorsque la machine selon l'invention travaille avec des moules en forme de tonneau tels que ceux représentés sur la fig. 3, on peut faciliter l'action de l'étrier en adoptant une réalisation mécanique particulière pour les branches dudit étrier. Une telle réalisation est représentée schématiquement sur la fig. 12, qui représente une variante de l'étrier de la fig.7. L'étrier 232 comprend une âme 234 support du moule. De part et d'autre de l'étrier 232 sont fixés des patins 235 qui maintiennent en position le moule dans l'étrier et font butée avec le moule qui précède et le moule qui suit. Les leviers 233, qui positionnent le moule et dégagent les crémaillères, sont fixés mobiles sur l'étrier 232 par l'intermédiaire d'un axe 240. Les leviers 233, situés de chaque côté de l'étrier 232, et de part et d'autre de celui-ci, sont, par paires opposées, maintenus souplement en position verticale par un agencement situé dans leur partie basse et comprenant de chaque côté de l'âme 234 une tige 238 et un ressort 237, de façon à s'adapter librement aux contours extérieurs du moule. Les leviers 233 comprennent chacun dans leur partie haute des patins 235 pour le dégagement des crémaillères et des patins 236 pour le positionnement du moule.

## Revendications

1. Machine à démouler des produits, tels que des jambons, comprimés chacun dans la cuve (3, 13) d'un moule (1, 11) par le couvercle (2, 12) dudit moule, ledit couvercle s'engageant dans l'ouverture de la cuve (3, 13) et étant rapporté de manière amovible sur la cuve (3, 13) grâce à au moins une traverse (5, 15) montée mobile sur deux colonnettes (4, 14) du couvercle (2, 12) et écartée de ce dernier par des moyens élastiques (6, 16), chaque traverse (5, 15) portant deux bras (7, 17) de fermeture à crémaillère, dont chacun est articulé sur une extrémité de la traverse (5, 15) et vient s'accrocher par l'une des dents de la crémaillère sous le rebord externe (8, 18) de la cuve (3, 13), qui entoure l'ouverture de celleci, ladite machine comprenant un bâti (21) supportant, en premier lieu, un dispositif extracteur du couvercle (2, 12), ce dispositif extracteur comportant lui-même un mécanisme de décrochage (37, 32, 33) pour décrocher du rebord (8, 18) de la cuve (3, 13) le bras (7, 17) de fermeture à crémaillère et un mécanisme d'enlèvement (42, 47, 43, 52, 54) du couvercle (2, 12) par préhension de la ou des traverses (5, 15) et, en second lieu, un dispositif de démoulage proprement-dit (56, 58) et d'évacuation des produits, chaque moule (1, 11) fermé et chargé étant introduit, parallèlement à la direction d'une traverse (5, 15) et à l'endroit, dans une gouttière (24) de la machine, ladite gouttière ayant une section transversale sensiblement en U s'ouvrant vers le haut et présentant des rebords rentrants (28) aptes à retenir la cuve (3, 13) du moule (1, 11) par son rebord externe (8, 18) lorsque son couvercle (2, 12) est enlevé par le dispositif extracteur, le produit étant alors sorti de la cuve (3, 13) par le dispositif de démoulage (56, 58) qui comprend une ventouse (58) déplacée par au moins un organe de manœuvre (56), caractérisée en ce que ladite ventouse est une ventouse d'aspiration déplaçable de telle façon que, pour chaque moule traité, ladite ventouse (58) est successivement descendue au contact du produit dans l'ouverture de la cuve (3, 13), puis, après mise en communication avec une source de dépression, est soulevée jusqu'à l'extraction complète du produit hors de la cuve (3, 13), et enfin translatée latéralement par rapport à la gouttière (24) jusqu'à venir au-dessus d'un convoyeur (62) d'évacuation des produits, sur lequel le produit est déchargé, puis ladite ventouse (58) est ramenée dans sa position initiale.

2. Machine selon la revendication 1, caractérisée par le fait qu'elle comprend une gouttière (24) unique, montée amovible en position fixe sur le bâti (21) de sorte que sa section en U s'ouvre vers le haut, ladite gouttière coopérant avec une butée transversale (30), qui arrête chaque moule (1, 11) dans la position où son couvercle (2, 12) est enlevé par le dispositif extracteur, ainsi qu'avec le mécanisme de décrochage, ledit mécanisme de décrochage comprenant un étrier (32, 32') en forme de U qui s'ouvre vers le haut et dont chacune des branches (33, 33') est montée coulissante dans au moins une glissière (31) solidaire de la gouttière (24) et s'étendant sous la base (26) de ladite gouttière, perpendiculairement à cette base (26), les glissières (31) des deux branches (33, 33') de l'étrier (32, 32') étant espacées le long de la gouttière (24), la base (26) de ladite gouttière présentant deux orifices (39) de passage pour les branches (33, 33') de l'étrier (32, 32'), ledit étrier étant monté mobile par rapport à la gouttière (24) et étant déplacé, par un organe de manœuvre (37), entre deux positions, dont l'une est une position dans laquelle les branches (33, 33') de l'étrier (32, 32') sont sorties sous la gouttière (24) afin de permettre lamise en place d'un moule (1, 11) fermé et chargé dans la gouttière (24) et contre la butée (30), et dont l'autre est une position dans laquelle les deux branches (33, 33') de l'étrier (32, 32') sont introduites dans la goutière (24) par les orifices (39) de la base (26) de celle-ci, la cuve (3, 13) du moule (1, 11) étant centrée, par ses deux côtés sur lesquels s'accrochent les bras (7, 17) de fermeture à crémaillière entre les deux branches (33, 33') de l'étrier (32, 32'), dont chacune est engagée entre la cuve (3, 13) et le (ou les) bras (7, 17) de fermeture à crémaillière, qui s'accroche(nt) à la cuve (3, 13) du côté correspondant, afin de permettre le décrochage desdits bras (7, 17), la gouttière (24) et l'étrier (32, 32') constituant un ensemble interchangeable adapté à une taille et à une forme de moule (1, 11) à traîter ainsi qu;au nombre de traverses (5, 15) du couvercle (2, 12) de ce moule (1, 11).

3. Machine selon la revendication 2, caractérisée par le fait que la gouttière (24) est rectiligne et présente, entre une entrée pour les moules (1, 11) fermés et chargés et une sortie pour les cuves (3, 13) de moule (1, 11) vides, une longueur suffisante pour recevoir au moins deux moules (1, 11) séparés par la butée transversale (30) qui délimite dans la gouttière (24), d'une part, une section amont, destinée à recevoir un moule (1, 11) fermé à ouvrir par le dispositif extracteur et, d'autre part, une section aval destinée à recevoir un moule (1, 11) ouvert à vider par le dispositif de démoulage (56, 58).

4. Machine selon l'une des revendications 2 ou 3, caractérisée par le fait que chaque branche (33, 33') de l'étrier (32, 32') forme une fourche présentant, pour chaque bras (7, 17) de fermeture à crémaillière s'accrochant du côté correspondant de la cuve (3, 13), une portée en biseau externe orientée vers l'extérieur de la cuve et constituant un coin (41) d'écartement du bras (7, 17) par rapport à la cuve (3, 13), ladite portée externe étant située en retrait entre deux portées en biseau internes orientées vers l'intérieur de la cuve (3, 13) et constituant des chanfreins (40) de centrage de la cuve (3, 13) entre les deux branches (33, 33') de l'étrier (32, 32').

5. Machine selon l'une des revendications 2 à 4, caractérisée par le fait que l'organe de manœuvre de l'étrier (32, 32') est un vérin (37), dont la tige (36) est munie à son extrémité libre d'un organe (35) d'accouplement et de désaccouplement rapide avec la base (34, 34') de l'étrier.

6. Machine selon l'une des revendications 2 à 5, caractérisée par le fait que le mécanisme d'enlèvement du couvercle (2, 12) comprend un organe de poussée (43) destiné à prendre appui sur chaque traverse (5, 15) et à comprimer les moyens élastiques (6, 16) afin de faciliter l'écartement des bras (7, 17) de fermeture par les branches (33, 33') de l'étrier (32, 32') ainsi qu'au moins deux organes de préhension (55) destinés à s'engager latéralement sous la (ou les) traverse(s) (5, 15), les organes de poussée (43) et de préhension (55) étant déplacés par un vérin (47) de poussée et de levage entre au moins deux positions, dont l'une est une position d'appui de l'organe de poussée (43) sur chaque traverse (5, 15) et d'engagement des organes de préhension (55) sous la (ou les) traverse(s) (5, 15) et dont l'autre est une position dans laquelle le couvercle (2, 12) est dégagé de la cuve (3, 13) et de la gouttière (24) par le soulèvement de sa (ou ses) traverse(s) (5, 15) par les organes de préhension (55).

7. Machine selon la revendication 6, caractérisée par le fait que l'organe de poussée (43) est la base d'un organe en U ouvrant vers le bas et dont les deux ailes (52) ont un écartement réglable par coulissement et blocage sur la base (43) afin de chevaucher la (ou les) traverse(s) (5, 15) du couvercle (2, 12), les organes de préhension étant constitués par les tiges (55) de deux vérins transversaux (54) fixés chacun par son cylindre à l'extérieur d'une aile (52) de l'organe en U, les tiges (55) sortant des cylindres et venant en saillie vers l'intérieur de l'organe en U sous la ou les traverses (5, 15), afin de soulever cette ou ces dernières avec le couvercle (2, 12) par la manœuvre du vérin de levage (47).

8. Machine selon l'une des revendications 6 ou 7, caractérisée par le fait que le mécanisme d'enlèvement du couvercle (12) comprend un organe (49, 50, 51) destiné à décoller le couvercle (12) du produit et comportant une ventouse d'insufflation (51) d'un gaz sous pression dans un trou central (20) du couvercle (12), ladite ventouse d'insufflation (51) étant appliquée contre le couvercle (12) au droit de son trou central (20) ou écartée du couvercle (12) par un vérin (49) d'approche et d'écartement qui est coaxial au vérin d'appui et de levage (47) et porté par la tige (48) de ce dernier.

9. Machine selon l'une des revendications 6 à 8, caractérisée par le fait que le mécanisme d'enlèvement du couvercle (2, 12) est translaté latéralement par rapport à la gouttière (24) entre deux positions, dont l'une est une position située au-dessus de la gouttière (24) et dans laquelle le vérin d'appui et de levage (47) est destiné à être manœuvré, et dont l'autre est une position située au-dessus d'un convoyeur (61) d'évacuation des couvercles (2, 12) sur lequel les couvercles sont déchargés par le dégagement latéral des organes de préhension (55) du dessous de la ou des traverses (5, 15).

10. Machine selon l'une des revendications 1 à 9, caractérisée par le fait que la ventouse d'aspiration (58) du dispositif de démoulage est déplacée entre sa position de contact avec le produit à démouler et sa position d'extraction complète du produit hors de la cuve (3, 13) par un vérin de levage et d'abaissement (56).

11. Machine selon la revendication 10, caractérisée par le fait que les translations latérales de la ventouse d'aspiration (58) et du mécanisme (42) d'enlèvement du couvercle (2, 12) par rapport à la gouttière (24) sont commandées simultanément par un vérin de translation (60) déplaçant un cadre (46), qui supporte ce mécanisme (42) d'enlèvement du couvercle (2, 12) et le vérin de levage et d'abaissement (56) de la ventouse d'aspiration (58), entre deux positions, dont l'une est une position dans laquelle la ventouse d'aspiration (58) et le mécanisme (42) d'enlèvement du couvercle sont tous deux au-dessus de la gouttière (24) et l'autre une position dans laquelle la ventouse d'aspiration (58) et le mécanisme (42) d'enlèvement du couvercle sont, respectivement, au-dessus d'un convoyeur d'évacuation (62) des produits et d'un convoyeur d'évacuation (61) des couvercles (2, 12).

12. Machine selon l'une des revendications 1 à 11, caractérisée par le fait que le dispositif de démoulage comprend également un organe (63, 64) destiné à décoller le produit de la cuve (3, 13) du moule (1, 11) et comportant une ventouse d'insufflation (64) d'un gaz sous pression dans un trou central (9) du fond de la cuve (3, 13), ladite ventouse d'insufflation (64) étant appliquée contre le fond de la cuve (3, 13) au droit du trou (9) en s'engageant dans un orifice ménagé à cet effet dans la base (26) de la gouttière (24) ou étant écartée du fond de la cuve (3, 13) par un vérin d'approche et d'écartement (63) monté fixe sur un bâti (21) de la machine et disposé sous la gouttière (24).

13. Machine selon l'une des revendications 3 à 12, prises en combinaison avec la revendication 2, caractérisée par le fait que la butée transversale (30) est une butée fixe formant un pont au-dessus de l'ouverture supérieure de la gouttière (24), et contre laquelle vient en appui l'extrémité aval de la (ou des) traverse(s) (5, 15) des moules (1, 11) fermés et chargés introduits dans la gouttière (24), et/ou le bras (7, 17) de fermeture de l'extrémité aval de chacune de ces traverses (5, 15), la butée (30) ne s'opposant pas au déplacement dans la gouttière (24) d'une cuve (3, 13) de moule (1, 11) sans couvercle (2, 12).

14. Machine selon l'une des revendications 1 à 13, caractérisée par le fait que la gouttière (24) se prolonge par une goulotte de renversement (65) des cuves (3, 13), s'étendant selon un arc de cercle vertical et débouchant, sous la gouttière (24), sur un convoyeur (67) d'évacuation des cuves vides et renversées (3, 13).

15. Machine selon les revendications 9 et 14, prises simultanément, caractérisée par le fait que la sortie du convoyeur (61) d'évacuation des couvercles (2, 12) débouche sur l'extrémité supérieure d'une glissière (68) qui délivre, à son extrémité inférieure, des couvercles (2, 12) sur le convoyeur (67) d'évacuation des cuves (3, 13), afin de regrouper sur ce convoyeur (67) une cuve (3, 13) et son couvercle (2, 12), avant passage dans un poste de nettoyage.

16. Machine selon l'une des revendications 1 à 13, caractérisée par le fait que la gouttière (24) est suivie d'un plateau (165) susceptible de pivoter autour d'un axe (166) pour assurer le renversement des cuves et leur évacuation sur un convoyeur (167).

17. Machine selon la revendication 16, caractérisée par le fait que le convoyeur (167) est disposé sensiblement parallèlement à la ligne moyenne de la gouttière (24) et qu'au droit du dispositif extracteur de couvercles, il reçoit le couvercle transporté par le mécanisme d'enlèvement du couvercle, le convoyeur d'évacuation (162) du produit extrait de la cuve de moule étant disposé au-dessus du convoyeur d'évacuation des moules selon une ligne moyenne sensiblement perpendiculaire à celle du convoyeur de moules.

18. Machine selon l'une des revendications 1 à 17, caractérisée par le fait que la gouttière (24) est équipée de cales (29) de guidage réalisées en un matériau à faible coefficient de frottement.

19. Machine selon l'une des revendications 3 à 18, prises en combinaison avec la revendication 5, caractérisée par le fait que la gouttière (24) est solidaire de deux paires de douilles externes (23), chaque paire comprenant deux douilles (23) coaxiales et décalées le long de la gouttière (24) sur un côté de celle-ci, et l'axe des douilles (23) d'une paire étant parallèle à celui des douilles (23) de l'autre paire, la gouttière (24) étant engagée par ses douilles (23) sur deux tiges de support (22), parallèles et solidaires du bâti (21) de la machine, et étant bloquée en position par appui contre au moins une butée solidaire du bâti (21) et par vissage d'une butée à écrou (25) sur l'extrémité filetée de chaque tige de support (22), qui reste en saillie hors d'une douille (23).

**Patentansprüche**

1. Maschine zum Entformen von Produkten, wie Schinken, welche jeweils im Trog (3, 13) einer Pressform (1, 11) mittels deren Deckel (2, 12) komprimiert sind, der in die Öffnung des Troges (3, 13) eingreift und mit Hilfe mindestens einer Traverse (5, 15) auf den Trog (3, 13) abnehmbar aufgesetzt ist, welche auf zwei Säulen (4, 14) des Deckels (2, 12) beweglich angeordnet sowie durch elastische Mittel (6, 16) von demselben weg gespreizt ist und zwei Zahnstangen-Schliessarme (7, 17) trägt, die jeweils an ein Ende der Traverse (5, 15) angelenkt sind und mit einem Zahnstangenzahn den nach aussen umgebogenen Rand (8, 18) des Troges (63, 13) untergreifen, welcher dessen Öffnung umschliesst, wobei die Maschine ein Gerüst (21) aufweist, welches erstens eine Extraktionsvorrichtung für den Deckel (2, 12) mit einem Mechanismus (37, 32, 33) zum Loshaken der Zahnstangen-Schliessarme (7, 17) vom Rand (8, 18) des Troges (3, 13) sowie einem Mechanismus (42, 47, 43, 52, 54) zum Abnehmen des Deckels (2, 12) unter Ergreifen der Traverse (5) bzw. der Traversen (15) und zweitens eine Vorrichtung (56, 58) zum eigentlichen Entformen sowie zum Austragen der Produkte trägt, und wobei jede geschlossene sowie gefüllte Pressform (1, 11) seitlich und parallel zur Traversenrichtung in eine Rinne (24) der Maschine eingeführt wird, welche einen im wesentlichen U-förmigen, oben offenen Querschnitt und nach innen umgebogene Ränder (28) zum Zurückhalten des Troges (3, 13) der Pressform (1, 11) mittels des nach aussen umgebogenen Randes (8, 18) desselben beim Abnehmen des Deckels (2, 12) derselben durch die Extraktionsvorrichtung aufweist, wonach das Produkt aus dem Trog (3, 13) durch die Entformvorrichtung (56, 58) herausgenommen wird, die einen mittels mindestens eines Betätigungsorgans (56) bewegten Napf (58) aufweist, dadurch gekennzeichnet, dass der Napf ein Saugnapf ist, welcher derart beweglich ist, dass er für jede behandelte Pressform nacheinander in die Öffnung des Troges (3, 13) abgesenkt wird, um das Produkt zu berühren, dann nach Verbindung mit einer Unterdruckquelle bis zur vollständigen Extraktion des Produktes aus dem Trog (3, 13) angehoben wird und schliesslich seitlich zur Rinne (24) bis über einen Austragförderer (62) für die Produkte verschoben wird, auf welchem das Produkt abgelegt wird, wonach der Napf (58) wieder in die Ausgangsstellung zurückgeführt wird.

2. Maschine nach Anspruch 1, dadurch gekennzeichnet, dass sie eine einzige Rinne (24) aufweist, welche lösbar in fester Position am Gerüst (21) angebracht ist, so dass ihr U-förmiger Querschnitt sich nach oben öffnet, und welche mit einem Queranschlag (30), der jede Pressform (1, 11) in derjenigen Position stoppt, in welcher ihr Deckel (2, 12) durch die Extraktionsvorrichtung abgenommen wird, sowie mit dem Loshakmechanismus zusammenwirkt, der einen U-förmigen oben offenen Bügel (32, 32') aufweist, dessen Schenkel (33, 33') jeweils in mindestens einer an der Rinne (24) befestigten und sich unter deren Boden (26) senkrecht zu demselben erstreckenden Gleitschiene (31) verschiebbar sind, wobei die Gleitschienen (31) der beiden Schenkel (33, 33') des Bügels (32, 32') entlang der Rinne (24) im Abstand voneinander angeordnet sind, deren Boden (26) zwei Durchgangsöffnungen (39) für die Schenkel (33, 33') des Bügels (32, 32') aufweist, welcher bezüglich der Rinne (24) beweglich angeordnet ist sowie mittels eines Betätigungsorgans (37) zwischen zwei Positionen verstellt wird, in denen die Schenkel (33, 33') des Bügels (32, 32') unter die Rinne (24) herausbewegt sind, um eine geschlossene sowie gefüllte Pressform (1, 11) in der Rinne (24) gegen den Anschlag (30) laufen zu lassen, bzw. die beiden Schenkel (33, 33') des Bügels (32, 32') in die Rinne (24) durch die Öffnungen (39) von deren Boden (26) hindurch unter Zentrierung des Troges (3, 13) der Pressform (1, 11) mit seinen beiden Seiten, an denen die Zahnstangen-Schliessarme (7, 17) angreifen, zwischen den beiden Schenkeln (33, 33') des Bügels (32, 32') eingeführt sind, welche jeweils zwischen den Trog (3, 13) und den auf der entsprechenden Seite am Trog (3, 13) angreifenden Zahnstangen-Schliessarm (7) bzw. die auf der entsprechenden Seite am Trog (3, 13) angreifenden Zahnstangen-Schliessarme (17) zum Loshaken der Arme (7, 17) eindringen, und wobei die Rinne (24) sowie der Bügel (32, 32') eine auswechselbare Gruppe bilden, welche den Abmessungen und der Gestalt der jeweils zu behandelnden Pressformen (1, 11) sowie der Anzahl von Traversen (5, 15) ihres Deckels (2, 12) angepasst ist.

3. Maschine nach Anspruch 2, dadurch gekennzeichnet, dass die Rinne (24) geradlinig verläuft und zwischen einem Eingang für die geschlossenen sowie gefüllten Pressformen (1, 11) sowie einem Ausgang für die leeren Tröge (3, 13) der Pressformen (1, 11) eine zur Aufnahme von mindestens zwei durch den Queranschlag (30) voneinander getrennten Pressformen (1, 11) ausreichende Länge aufweist, wobei der Anschlag (30) in der Rinne (24) einerseits einen vorderen Abschnitt zur Aufnahme einer geschlossenen, durch die Extraktionsvorrichtung zu öffnenden Pressform (1, 11) und andererseits einen hinteren Abschnitt zur Aufnahme einer offenen, durch die Entformvorrichtung (56, 58) zu entleerenden Pressform (1, 11) begrenzt.

4. Maschine nach Anspruch 2 oder 3, dadurch gekennzeichnet, dass jeder Schenkel (33, 33') des Bügels (32, 32') eine Gabel bildet, welche für jeden auf der entsprechenden Seite am Trog (3, 13) angreifenden Zahnstangen-Schliessarm (7, 17) eine äussere Schrägfläche aufweist, die vom Trog weg gerichtet ist sowie einen Keil (41) zum Wegspreizen des Armes (7, 17) vom Trog (3, 13) bildet und zurückgesetzt zwischen zwei inneren Schrägflächen angeordnet ist, welche zum Trog (3, 13) hin gerichtet sind sowie Abschrägungen (40) zum Zentrieren des Troges (3, 13) zwischen den beiden Schenkeln (33, 33') des Bügels (32, 32') bilden.

5. Maschine nach einem der Ansprüche 2 bis 4, dadurch gekennzeichnet, dass das Betätigungsorgan des Bügels (32, 32') eine Kolben/Zylinder-Einheit (37) ist, deren Kolbenstange (36) an ihrem freien Ende mit einem Organ (35) zum schnellen An- und Abkuppeln an die bzw. von der Basis (34, 34') des Bügels versehen ist.

6. Maschine nach einem der Ansprüche 2 bis 5, dadurch gekennzeichnet, dass der Mechanismus zum Abnehmen des Deckels (2, 12) ein Drückorgan (43) zur Anlage an jeder Traverse (5, 15) sowie zum Komprimieren der elastischen Mittel (6, 16) aufweist, um das Auseinanderspreizen der Schliessarme (7, 17) durch die Schenkel (33, 33') des Bügels (32, 32') zu erleichtern, ferner mindestens zwei Greiforgane (55) zum seitlichen Untergreifen der Traverse (5) bzw. der Traversen (15), wobei das Drückorgan (43) und die Greiforgane (55) mittels einer Drück- und Hebe-Kolben-Zylinder-Einheit (47) zwischen mindestens zwei Positionen verstellt werden, nämlich einer Position für das Anlegen des Drückorgans (43) an jede Traverse (5, 15) und für das Greifen der Greiforgane (55) unter die Traverse (5) bzw. die Traversen (15) und einer Position, in welcher der Deckel (2, 12) vom Trog (3, 13) und von der Rinne (24) durch das Anheben seiner Traverse (5) bzw. seiner Traversen (15) mittels der Greiforgane (55) entfernt ist.

7. Maschine nach Anspruch 6, dadurch gekennzeichnet, dass das Drückorgan (43) die Basis eines U-förmigen, unten offenen Organs ist, wobei der gegenseitige Abstand von dessen beiden Flügeln (52) durch Verschiebung und Blockierung an der Basis (43) zum Übergreifen der Traverse (5) bzw. der Traversen (15) des Deckels (2, 12) einstellbar ist und die Greiforgane von den Kolbenstangen (55) zweier querliegender, jeweils mit ihrem Zylinder aussen an einem Flügel (52) des U-förmigen Organs befestigter Kolben/Zylinder-Einheiten (54) gebildet sind, welche aus den Zylindern austreten und in das U-förmige Organ unter die Traverse (5) bzw. die Traversen (15) laufen, um letztere mit dem Deckel (2, 12) durch die Betätigung der Hebe-Kolben/Zylinder-Einheit (47) anzuheben.

8. Maschine nach Anspruch 6 oder 7, dadurch gekennzeichnet, dass der Mechanismus zum Abnehmen des Deckels (12) ein Organ (49, 50, 51) zum Ablösen des Deckels (12) vom Produkt aufweist, welches einen Blasnapf (51) zum Einblasen eines Druckgases in ein mittleres Loch (20) des Deckels (12) aufweist, der mittels einer zur Anlege- und und Hebe-Kolben/Zylinder-Einheit (47) koaxialen und von deren Kolbenstange (48) getragenen Zustell- und Rückstell-Kolben/Zylinder-Einheit (49) gegen den Deckel (12) im Bereich seines mittleren Loches (20) gerückt bzw. vom Deckel (12) wegbewegt wird.

9. Maschine nach einem der Ansprüche 6 bis 8, dadurch gekennzeichnet, dass der Mechanismus zum Abnehmen des Deckels (2, 12) seitlich zur Rinne (24) zwischen zwei Positionen oberhalb der Rinne (24) zur Betätigung der Anlege- und Hebe-Kolben/Zylinder-Einheit (47) bzw. oberhalb eines Austragförderers (61) für die Deckel (2, 12) verschoben wird, auf welchem die Deckel durch das seitliche Entfernen der Greiforgane (55) unter der Traverse (5) bzw. unter den Traversen (15) abgelegt werden.

10. Maschine nach einem der Ansprüche 1 bis 9, dadurch gekennzeichnet, dass der Saugnapf (58) der Entformvorrichtung zwischen seiner Position, in der er das zu entformende Produkt berührt, und seiner Position, in der er das Produkt vollständig aus dem Trog (3, 13) extrahiert hat, mittels einer Hebe- und Absenk-Kolben/Zylinder-Einheit (56) verstellt wird.

11. Maschine nach Anspruch 10, dadurch gekennzeichnet, dass die seitlichen Verschiebungen des Saugnapfes (58) und des Mechanismus (42) zum Abnehmen des Deckels (2, 12) bezüglich der Rinne (24) simultan mittels einer Verschiebe-Kolben/Zylinder-Einheit (60) bewirkt werden, welche einen Tragrahmen (46) für den Mechanismus (42) zum Abnehmen des Deckels (2, 12) und für die Hebe- und Absenk-Kolben/Zylinder-Einheit (56) des Saugnapfes (58) zwischen zwei Positionen verstellt, in denen der Saugnapf (58) und der Mechanismus (42) zum Abnehmen des Deckels sich beide über der Rinne (24) bzw. sich jeweils über einem Austragförderer (62) für die Produkte bzw. über einem Austragförderer (61) für die Deckel (2, 12) befinden.

12. Maschine nach einem der Ansprüche 1 bis 11, dadurch gekennzeichnet, dass die Entformvorrichtung ebenfalls ein Organ (63, 64) zum Ablösen des Produktes vom Trog (3, 13) der Pressform (1, 11) aufweist, welches einen Blasnapf (64) zum Einblasen eines Druckgases in ein mittleres Loch (9) des Bodens des Troges (3, 13) aufweist, der mittels einer fest an einem Gerüst (21) der Maschine angebrachten und unter der Rinne (24) angeordneten Zustell- und Rückstell-Kolben/Zylinder-Einheit (63) gegen den Boden des Troges (3, 13) im Bereich des Loches (9) unter Eingriff in eine zu diesem Zweck im Boden (26) der Rinne (24) ausgebildeten Öffnung gedrückt bzw. vom Boden des Troges (3, 13) wegbewegt wird.

13. Maschine nach einem der Ansprüche 3 bis 12 in Verbindung mit Anspruch 2, dadurch gekennzeichnet, dass der Queranschlag (30) ein fester Anschlag ist, welcher oberhalb der oberen Öffnung der Rinne (24) eine Brücke bildet und an welchem das vorlaufende Ende der Traverse (5) bzw. der Traversen (15) der in die Rinne (24) eingeführten geschlossenen sowie gefüllten Pressformen (1, 11) und/oder der Schliessarme (7, 17) des vorlaufenden Endes jeder Traverse (5, 15) zur Anlage kommt, wobei der Anschlag (30) jedoch der Bewegung des Troges (3, 13) einer Pressform (1, 11) ohne Deckel (2, 12) nicht entgegensteht.

14. Maschine nach einem der Ansprüche 1 bis 13, dadurch gekennzeichnet, dass die Rinne (24) durch eine Wenderutsche (65) für die Tröge (3, 13) verlängert ist, welche sich entlang eines vertikalen Kreisbogens erstreckt und unter der Rinne (24) auf einen Austragförderer (67) für die leeren, gewendeten Tröge (3, 13) mündet.

15. Maschine nach den Ansprüchen 9 und 14, dadurch gekennzeichnet, dass der Austragförderer (61) für die Deckel (2, 12) ausgangsseitig auf das obere Ende einer Gleitschiene (68) mündet, welche an ihrem unteren Ende Deckel (2, 12) auf den Austragförderer (67) für die Tröge (3, 13) abgibt, um auf demselben je einen Trog (3, 13) und seinen Deckel (2, 12) zu gruppieren, bevor sie zu einer Reinigungsstation gelangen.

16. Maschine nach einem der Ansprüche 1 bis 13, dadurch gekennzeichnet, dass auf die Rinne (24) eine Platte (165) folgt, welche zum Wenden der Tröge und für ihren Austrag auf einen Förderer (167) um eine Achse (166) schwenkbar ist.

17. Maschine nach Anspruch 16, dadurch gekennzeichnet, dass der Förderer (167) im wesentlichen parallel zur Mittellinie der Rinne (24) angeordnet ist, und dass er in der Nähe der Deckelextraktionsvorrichtung den vom Mechanismus zum Abnehmen des Deckels transportierten Deckel empfängt, wobei der Austragförderer (162) für das aus dem Pressformtrog extrahierte Produkt oberhalb des Austragförderers für die Pressformen entlang einer Mittellinie angeordnet ist, welche im wesentlichen senkrecht zu derjenigen des Pressformförderers verläuft.

18. Maschine nach einem der Ansprüche 1 bis 17, dadurch gekennzeichnet, dass die Rinne (24) mit Führungsstücken (29) aus einem Material mit niedrigem Reibungskoeffizienten versehen ist.

19. Maschine nach einem der Ansprüche 3 bis 18 in Verbindung mit Anspruch 5, dadurch gekennzeichnet, dass an jeder Seite der Rinne (24) zwei äussere, koaxiale und im Abstand voneinander angeordnete Hülsen (23) befestigt sind, wobei die Achse des einen Hülsenpaares und die Achse des anderen Hülsenpaares parallel zueinander verlaufen und die Rinne (24) mit ihren Hülsen (23) auf zwei parallele, am Gerüst (21) der Maschine befestigte Tragstangen (22) aufgesteckt sowie zwischen mindestens einem am Gerüst (21) befestigten Widerlager und zwei mutterartigen Widerlagern (25) festgelegt ist, welche jeweils auf das aus einer Hülse (23) herausragende mit einem Aussengewinde versehene Ende der einen bzw. der anderen Tragstange (22) aufgeschraubt sind.

**Claims**

1. A machine for removing from moulds products such as hams which have been compressed each into the tub (3, 13) of a mould (1, 11) by the cover (2, 12) of the said mould, the said cover being engaged in the opening in the tub (3, 13) and being added detachably to the tub (3, 13) thanks to at least one crossbar (5, 15) mounted to be able to move along two small columns (4, 14) on the cover (2, 12) and separated from the latter by resilient means (6, 16), each crossbar (5, 15) carrying two rack closure arms (7, 17) each of which is hinged onto one end of the crossbar (5, 15) and becomes hooked by one of the teeth on the rack under the outer rim (8,18) of the tub (3, 13), which surrounds the opening in the latter, the said machine comprising a frame (21) supporting in the first place a cover extractor device (2, 12), this extractor device including in turn an unhooking mechanism (37, 32, 33) for unhooking the rack closure arms (7, 17) from the rim (8, 18) of the tub (3, 13) and a mechanism (42, 47, 43, 52, 54) for removal of the cover (2, 12) by gripping the crossbar or crossbars (5, 15) and in the second place a device proper (56, 58) for removal from the mould and discharge of the products, each closed and loaded mould (1, 11) being introduced in parallel with the direction of a crossbar (5, 15) and right side up into a chute (24) in the machine, the said chute having a substantially U-shaped cross-section open upwards and exhibiting reentrant rims (28) suitable for retaining the tub (3, 13) of the mould (1, 11) by its outer rim (8, 18) when its cover (2, 12) is removed by the extractor device, the product being then brought out of the tub (3, 13) by the device (56, 58) for removal from the mould, which comprises a nozzle (58) moved by at least one manipulator member (56), characterized in that the said nozzle is a suction nozzle which may be moved so that for each mould dealt with, the said nozzle (58) is successively lowered into contact with the product in the opening in the tub (3, 13) and then after having been put into communication with a source of reduced pressure, is raised until the product has been extracted completely from the tub (3, 13) and finally is translated sideways with respect to the chute (24) until coming above a conveyor (62) for discharge of the products, onto which the product is unloaded, and then the said nozzle (58) is brought back into its starting position.

2. A machine as in Claim 1, characterized by the fact that it comprises a single chute (24) mounted removably in a fixed position on the frame (21) so that its U-shaped cross-section opens upwards, the said chute cooperating with a transverse stop (30) which stops each mould (1, 11) in the position in which its cover (2, 12) is removed by the extractor device, as well as with the unhooking mechanism, the said unhooking mechanism comprising a U-shaped stirrup (32, 32') which opens upwards and each of the branches (33, 33') of which is mounted to slide in at least one slide (31) integral with the chute (24) and extending under the base (26) of the said chute perpendicularly to this base (26), the slides (31) of the two branches (33, 33') of the stirrup (32, 32') being spaced along the chute (24), the base (26) of the said chute exhibiting two apertures (39) for the branches (33, 33') of the stirrup (32, 32') to pass through, the said stirrup being mounted to be able to move with respect to the chute (24) and being moved by a manipulator member (37) between two positions of which the one is a position in which the branches (33, 33') of the stirrup (32, 32') are brought out under the chute (24) in order to enable the putting of a closed and loaded mould (1, 11) in place in the chute (24) and against the stop (30), and the other is a position in which the two branches (33, 33') of the stirrup (32, 32') are introduced into the chute (24) through the apertures (39) in its base (26), the tub (3, 13) of the mould (1, 11) being centred by the two sides of it onto which the rack closure arms (7, 17) are hooked, between the two branches (33, 33') of the stirrup (32, 32'), each of which is engaged between the tub (3, 13) and the rack closure arm or arms (7, 17) which is (are) hooked onto the corresponding side of the tub (3, 13), in order to enable unhooking of the said arms (7, 17), the chute (24) and the stirrup (32, 32') forming an interchangeable unit adapted to one size and one shape of mould (1, 11) to be dealt with as well as to the number of crossbars (5, 15) on the cover (2, 12) of this mould (1, 11).

3. A machine as in Claim 2, characterized by the fact that the chute (24) is straight and exhibits between an entrance for the closed and loaded moulds (1, 11) and an exit for the empty mould (1, 11) tubs (3, 13) a sufficient length for receiving at least two moulds (1, 11) separated by the transverse stop (30) which demarcates in the chute (24) on the one hand an upstream section intended for receiving a closed mould (1, 11) for opening by the extractor device and on the other hand a downstream section intended for receiving an open mould (1, 11) for emptying by the device (56, 58) for removal from the mould.

4. A machine as in one of the Claims 2 or 3, characterized by the fact that each branch (33, 33') of the stirrup (32, 32') forms a fork exhibiting for each rack closure arm (7, 17) hooked onto the corresponding side of the tub (3, 13) an outer bevel bearing surface directed towards the outside of the tub and forming a wedge (41) for diverting the arm (7, 17) with respect to the tub (3, 13), the said outer bearing surface being recessed between two inner bevel bearing surfaces directed towards the inside of the tub (3, 13) and forming chamfers (40) for centrieng the tub (3, 13) between the two branches (33, 33') of the stirrup (32, 32').

5. A machine as in one of the Claims 2 to 4, characterized by the fact that the manipulator member for the stirrup (32, 32') is a jack (37) the rod (36) of which is equipped at its free end with a member (35) for rapid coupling to and uncoupling from the base (34, 34') of the stirrup.

6. A machine as in one of the Claims 2 to 5, characterized by the fact that the mechanism for removal of the cover (2, 12) comprises a thrust member (43) intended for bearing against each crossbar (5, 15) and compressing the resilient means (6, 16) in order to facilitate the diversion of the closure arms (7, 17) by the branches (33, 33') of the stirrup (32, 32') as well as at least two gripping members (55) intended for being engaged sideways under the crossbar or crossbars (5, 15), the thrust member (43) and gripping members (55) being moved by a thrusting and lifting jack (47) between at least two positions of which the one is a position with the thrust member (43) bearing against each crossbar (5, 15) and with the gripping members (55) engaging under the crossbar or crossbars (5, 15), and the other is a position in which the cover (2, 12) is disengaged from the tub (3, 13) and from the chute (24) by the raising of its crosssbar or crossbars (5, 15) by the gripping members (55).

7. A machine as in Claim 6, characterized by the fact that the thrust member (43) is the base of a U-shaped member open downwards, the two wings (52) of which have a separation adjustable by sliding and locking onto the base (43) in order to straddle the crossbar or crossbars (5, 15) of the cover (2, 12), the gripping members consisting of the rods (55) of two transverse jacks (54) attached each by its cylinder to the outside of one wing (52) of the U-shaped member, the rods (55) leaving the cylinders and coming to project towards the inside of the U-shaped member under the crossbar or crossbars (5, 15) in order to raise the latter with the cover (2, 12) by the manipulation of the lifting jack (47).

8. A machine as in one of the Claims 6 or 7, characterized by the fact that the mechanism for removal of the cover (12) comprises a member (49, 50, 51) intended for unsticking the cover (12) from the product and including a nozzle (51) for blowing a gas under pressure into a central hole (20) in the cover (12), the said blow-in nozzle (51) being applied against the cover (12) at right angles to its central hole (20) or separated from the cover (12) by a jack (49) for approach and separation, which is coaxial with the thrusting and lifting jack (47) and carried by the rod (48) of the latter.

9. A machine as in one of the Claims 6 to 8, characterized by the fact that the mechanism for removal of the cover (2, 12) is translated sideways with respect to the chute (24) between two positions of which the one is a position situated above the chute (24), in which the thrusting and lifting jack (47) is intended to be manipulated, and the other is a position situated above a conveyor (61) for discharge of the covers (2, 12) onto which the covers are unloaded by the sideways disengagement of the gripping members (55) from below the crossbar or crossbars (5, 15).

10. A machine as in one of the Claims 1 to 9, characterized by the fact that the suction nozzle (58) of the device for removal from the mould is moved between its position of contact with the product to be removed from the mould and its position of complete extraction of the product from the tub (3, 13) by a raising and lowering jack (56).

11. A machine as in Claim 10, characterized by the fact that the sideways translations of the suction nozzle (58) and of the mechanism (42) for removal of the cover (2, 12) with respect to the chute (24) are operated simultaneously by a translation jack (60) moving a frame (46) which supports the said mechanism (42) for removal of the cover (2, 12) and the jack (56) for raising and lowering the suction nozzle (58), between two positions of which the one is a position in which the suction nozzle (58) and the mechanism (42) for removal of the cover are both above the chute (24), and the other a position in which the suction nozzle (58) and the mechanism (42) for removal of the cover are respectively above a conveyor (62) for discharge of the products and above a conveyor (61) for discharge of the covers (2, 12).

12. A machine as in one of the Claims 1 to 11, characterized by the fact that the device for removal from the mould likewise comprises a member (63, 64) intended for unsticking the product from the tub (3, 13) of the mould (1, 11) and including a nozzle (64) for blowing a gas under pressure into a central hole (9) in the bottom of the tub (3, 13), the said blow-in nozzle (64) being applied against the bottom of the tub (3, 13) at right angles to the hole (9) whilst engaged in an aperture cut for this purpose in the base (26) of the chute (24), or being separated from the bottom of the tub (3, 13) by a jack (63) for approach and separation, mounted fixed on a frame (21) of the machine and arranged under the chute (24).

13. A machine as in one of the Claims 3 to 12, taken in combination with Claim 2, characterized by the fact that the transverse stop (30) is a fixed stop forming a bridge above the upper opening of the chute (24), against which the downstream end of the crossbar or crossbars (5, 15) of the closed and loaded moulds (1, 11) introduced into the chute (24) and/or the closure arm (7, 17) at the downstream end of each of these crossbars (5, 15) come to bear, whereas the stop (30) is not opposed to the movement in the chute (24) of a mould (1, 11) tub (3, 13) without a cover (2, 12).

14. A machine as in one of the Claims 1 to 13, characterized by the fact that the chute (24) is prolonged by a spout (65) for inversion of the tubs (3, 13), extending along an arc of a vertical circle and opening out under the chute (24) onto a conveyor (67) for discharge of the empty and inverted tubs (3, 13).

15. A machine as in Claims 9 and 14, taken simultaneously, characterized by the fact that the exit from the conveyor (61) for discharge of the covers (2, 12) opens out onto the top end of a slide (68) which at its bottom end delivers covers (2, 12) onto the conveyor (67) for discharge of the tubs (3, 13) in order to regroup a tub (3, 13) and its cover (2, 12) on this conveyor (67) before passing through a cleaning station.

16. A machine as in one of the Claims 1 to 13, characterized by the fact that the chute (24) is followed by a table (165) capable of pivoting about an axis (166) in order to ensure the inversion of the tubs and their discharge onto a conveyor (167).

17. A machine as in Claim 16, characterized by the fact that the conveyor (167) is arranged substantially in parallel with the centreline of the chute (24) and that at right angles to the cover extractor device it receives the cover conveyed by the cover removal mechanism, the conveyor (162) for discharge of the product extracted from the mould tub being arranged above the conveyor for discharge of the moulds along a centreline substantially perpendicular to that of the mould conveyor.

18. A machine as in one of the Claims 1 to 17, characterized by the fact that the chute (24) is equipped with guideblocks (29) produced from a material having a low coefficient of friction.

19. A machine as in one of the claims 3 to 18, taken in combination with Claim 5, characterized by the fact that the chute (24) is integral with two pairs of external sockets (23), each pair comprising two coaxial sockets (23) spaced apart along the chute (24) on one side of it, and the axis of the sockets (23) of one pair being parallel with that of the sockets (23) of the other pair, the chute (24) being engaged by its sockets (23) on two supporting rods (22), parallel and integral with the frame (21) of the machine and being locked in position by bearing against at least one stop integral with the frame (21) and by the screwing of a stopnut (25) onto the threaded end of each supporting rod (22), which remains projecting out of one socket (23).

FIG. 1

FIG. 2

FIG. 3

FIG. 9

**FIG. 4**

0 138 653

FIG. 5

23

FIG. 6

FIG. 7

FIG. 8

FIG. 10

FIG. 11

FIG. 12

FIG. 13